# EUROPEAN PATENT SPECIFICATION

(11) **EP 2 995 167 B1**
(45) Date of publication and mention of the grant of the patent: **18.04.2018**
(21) Application number: 14793975.5
(22) Date of filing: 16.01.2014
(51) Int. Cl.: H04W 76/04, H04W 40/00, H04W 76/02, H04W 36/00, H04W 76/06, H04W 36/14, H04W 36/22

(54) **AVOIDING IDLE-STATE TRANSITION FOR WLAN-CONNECTED MOBILE TERMINAL**
VERMEIDUNG EINES LEERLAUFSTATUSÜBERGANGS FÜR EIN WLAN-VERBUNDENDES MOBILES ENDGERÄT
EVITEMENT D'UNE TRANSITION A L'ETAT DE REPOS POUR UN TERMINAL MOBILE CONNECTE A UN RESEAU LOCAL SANS FIL (WLAN)

(30) Priority: 06.05.2013 US 201361819933 P; 08.05.2013 US 201361820886 P
(43) Date of publication of application: 16.03.2016
(73) Proprietor: Telefonaktiebolaget LM Ericsson (publ), 164 83 Stockholm (SE)
(72) Inventor: BERGSTRÖM, Mattias, S-120 71 Stockholm (SE); PERSSON, Håkan, S-171 57 Solna (SE); TEYEB, Oumer, S-177 44 Solna (SE); SEDLACEK, Ivo, 186 00 Praha 8 (CZ); WANG, Yu, S-169 74 Solna (SE); JOHANSSON, Niklas, S-191 38 Sollentuna (SE); ZAMBRANO MERCADO, Darine, S-169 72 Stockholm (SE)
(74) Representative: Ericsson
(86) International application number: PCT/SE2014/050042
(87) International publication number: WO 2014/182210

(56) References cited:
- EP-A1- 1 646 189
- WO-A1-2004/008787
- WO-A2-2004/002051
- US-A1- 2013 064 107
- US-A1- 2013 065 585
- ERICSSON ET AL.: 'Connected mode access selection solution for WLAN/3GPP radio interworking;' 3GPP TSG-RAN WG2 #81 BIS; R2-131389 06 April 2013, CHICAGO, IL , USA, pages 1 - 3, XP050699516
- '3rd Generation Partnership Project; Technical Specification Group Radio Access Network; Study on WLAN/3GPP Radio Interworking (Release 12' 3GPP TR 37.834 V0.2.0 April 2013,

## Description

### TECHNICAL FIELD

The present disclosure is generally related to wireless communications systems, and is more particularly related to techniques for controlling the operation of mobile terminals with respect to the use of multiple radio access technologies, such as a wide area wireless communication technology and a wireless local area network (WLAN) technology.

### BACKGROUND

The wireless local-area network (WLAN) technology known as "Wi-Fi" has been standardized by IEEE in the 802.11 series of specifications (i.e., as "IEEE Standard for Information technology-Telecommunications and information exchange between systems. Local and metropolitan area networks-Specific requirements. Part 11: Wireless LAN Medium Access Control (MAC) and Physical Layer (PHY) Specifications"). As currently specified, Wi-Fi systems are primarily operated in the 2.4 GHz or 5 GHz bands.

The IEEE 802.11 specifications regulate the functions and operations of the Wi-Fi access points or wireless terminals, collectively known as "stations" or "STA," in the IEEE 802.11, including the physical layer protocols, Medium Access Control (MAC) layer protocols, and other aspects needed to secure compatibility and inter-operability between access points and portable terminals. Because Wi-Fi is generally operated in unlicensed bands, communication over Wi-Fi may be subject to interference sources from any number of both known and unknown devices. Wi-Fi is commonly used as wireless extensions to fixed broadband access, e.g., in domestic environments and in so-called hotspots, like airports, train stations and restaurants.

Recently, Wi-Fi has been subject to increased interest from cellular network operators, who are studying the possibility of using Wi-Fi for purposes beyond its conventional role as an extension to fixed broadband access. These operators are responding to the ever-increasing market demands for wireless bandwidth, and are interested in using Wi-Fi technology as an extension of, or alternative to, cellular radio access network technologies. Cellular operators that are currently serving mobile users with, for example, any of the technologies standardized by the 3rd-Generation Partnership Project (3GPP), including the radio-access technologies known as Long-Term Evolution (LTE), Universal Mobile Telecommunications System (UMTS)/Wideband Code-Division Multiple Access (WCDMA), High Speed Packet Access (HSPA) and Global System for Mobile Communications (GSM), see Wi-Fi as a wireless technology that can provide good additional support for users in their regular cellular networks.

As used herein, the term "operator-controlled Wi-Fi" indicates a Wi-Fi deployment that on some level is integrated with a cellular network operator's existing network, where the operator's radio access network(s) and one or more Wi-Fi wireless access points may even be connected to the same core network and provide the same or overlapping services. Currently, several standardization organizations are intensely active in the area of operator-controlled Wi-Fi. In 3GPP, for example, activities to connect Wi-Fi access points to the 3GPP-specified core network are being pursued. In the Wi-Fi alliance (WFA), activities related to certification of Wi-Fi products are undertaken, which to some extent is also driven from the need to make Wi-Fi a viable wireless technology for cellular operators to support high bandwidth offerings in their networks. In these standardization efforts, the term "Wi-Fi offload" is commonly used and indicates that cellular network operators seek means to offload traffic from their cellular networks to Wi-Fi, e.g., during peak-traffic-hours and in situations when the cellular network needs to be off-loaded for one reason or another, e.g., to provide a requested quality-of-service, to maximize bandwidth, or simply for improved coverage.

Using Wi-Fi/WLAN (the two terms are used interchangeably throughout this document) to offload traffic from the mobile networks is becoming more and more interesting from both the operator's and end user's points of view. Some of the reasons for this tendency are:
- **Additional frequency:** by using Wi-Fi, operators can access an additional 85MHz of radio bandwidth in the 2.4GHz band and another (close to) 500MHz in the 5GHz band.
- **Cost:** From the operator's point of view, Wi-Fi uses unlicensed frequency that is free of charge. On top of that, the cost of Wi-Fi Access Points (APs), both from capital expense (CAPEX) and operational expenses (OPEX) aspects, is considerably lower than that of a 3GPP base station (BS) (i.e. NodeB (NB) in case of UMTS or enhanced NodeB (eNB) in case of LTE). Operators can also take advantage of already deployed APs that are already deployed in hotspots such as train stations, airports, stadiums, shopping malls, etc. Most end users are also currently used to having Wi-Fi for free at home (as home broadband subscriptions are usually flat rate) and public places.
- **Terminal support:** Many User Equipments (UEs), including virtually all smartphones, and other portable devices currently available in the market, support Wi-Fi. In the Wi-Fi world, the term Station (STA) is used instead of UE, and as such the terms UE, STA and terminal are used interchangeably in this document.
- **High data rate:** Under low interference conditions and assuming the user device is close to the Wi-Fi AP, Wi-Fi can provide high peak data rates (for example, theoretically up to 600Mbps for IEEE 802.11n deployments with MIMO (Multiple Input Multiple Output)).

For a wireless operator, offering a mix of two technologies that have been standardized in isolation from each other raises the challenge of providing intelligent mechanisms for co-existence. One area that needs these intelligent mechanisms is connection management.

Many of today's portable wireless devices (referred to hereinafter as "user equipments" or "UEs") support Wi-Fi in addition to one or several 3GPP cellular technologies. In many cases, however, these terminals essentially behave as two separate devices, from a radio access perspective. The 3GPP radio access network and the UE-based modems and protocols that are operating pursuant to the 3GPP specifications are generally unaware of the wireless access Wi-Fi protocols and modems that may be simultaneously operating pursuant to the 802.11 specifications. Techniques for coordinated control of these multiple radio-access technologies are needed.

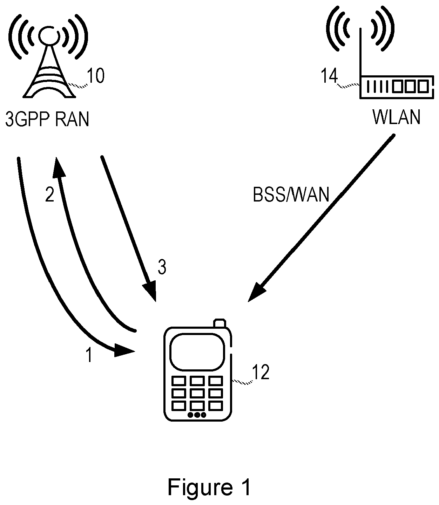

One example of a procedure for mobility between 3GPP networks and WLAN is described below. In short, this procedure is based on three messages and some associated procedures that allow the 3GPP network to determine when a terminal should associate with a WLAN or, more generally, to a network operating according to a second (different) radio access technology (RAT). The procedure is illustrated in Figure 1. The first message, a reporting configuration message (message 1), is sent from the 3GPP radio access network (RAN) 10 to the terminal 12 and configures the terminal 12 with a set of criteria for enabling, detecting, and/or performing measurements over the second RAT (WLAN 14). The terminal 12 subsequently sends a terminal report, message 2, to the 3GPP network 10, when the criteria given in the first message (message 1) have been fulfilled. The third message (message 3), a traffic steering message, is an indicator sent from the 3GPP network 10 to the terminal 12 that the terminal 12 should steer all or a subset of its traffic to the second RAT (WLAN 14).

Message 1 - Reporting configuration message: The content of this message is a set of criteria. The criteria could be that certain parameters should exceed or fall below a given threshold. Parameters which could be considered include 3GPP received signal strength, WLAN received signal strength, 3GPP received signal quality, WLAN received signal quality, 3GPP related load, WLAN related load, etc.

One possible set of criteria contained in one possible reporting configuration message is as follows:
- Received signal strength larger than threshold x
- Received signal quality larger than threshold y
- WLAN load less than threshold z

When the terminal 12 has received reporting configuration message it should monitor the parameters associated with the criteria indicated in reporting configuration message. In case the criteria are fulfilled the terminal 12 should send a terminal report (message 2) to the 3GPP network 10.

Message 2 - Terminal report: The terminal report is a message sent from the terminal 12 to the 3GPP network 10 reporting the fulfilment of the conditions given in reporting configuration message (message 1). The content of the report may include more information, such as all or part of the measurements done in the terminal 12 of the WLAN APs 14, and/or other information available in the terminal 12 from the WLAN 14, such as the WLAN load, etc. The arrow in Figure 1 from the WLAN 14 to the UE 12 indicates the transmission of BSS/WAN metrics, such as WLAN load, from the WLAN 14 to the UE 12. In addition to metrics such as the WLAN load, the UE 12 can include additional information about the WLAN 14 in the terminal report that has not been signalled by the WLAN 14 to the UE 12. For example, the UE 12 may also include measurements of WLAN signals in the terminal report.

A time-to-trigger value can be specified to indicate to the UE (terminal 12) for how long the criteria should be fulfilled before the UE (terminal 12) reports back with the terminal report (message 2). In addition to that, the UE (terminal 12) can be configured with some filtering/smoothing parameters that it can use when collecting measurements to ensure that decisions will not be made based on instantaneous values. For example, the UE (terminal 12) can be configured with a moving average filter over a given duration, and the filtered value will be the one that will be compared with the threshold specified in the reporting configuration message (message 1). The parameters for filtering could be included in the reporting configuration message (message 1) and applicable only to the associated criteria, or they can be generic and communicated to the UEs (terminal 12) beforehand (either in a dedicated or broadcasted manner) and applicable to all reporting configuration messages thereafter.

In the event that there is a need for the 3GPP network 10 to identify a specific WLAN 14 network and associated measurements, WLAN identifiers (such as service set identification (SSID), basic SSID (BSSID)) may be included in the terminal report along with the relevant measurements (e.g. for SSID X the signal strength is A, for SSID Y the signal strength is B). This information may be necessary if the 3GPP network 10 wants to move a terminal 12 to a specific WLAN network 14/AP/etc.

An exemplary terminal report (message 2) is shown below:

| |
|---|
| SSID = operatorX-WLAN7 |
| Received signal strength = - 73 dBm |
| Received signal quality = 4.2 dB |
| WLAN load = 47% |
| SSID = operatorX-WLAN2 |
| Received signal strength = - 82 dBm |
| Received signal quality = 2.5 dB |
| WLAN load = 47% |
| SSID = operatorX-WLAN5 |
| Received signal strength = - 96 dBm |
| Received signal quality = 1.4 dB |
| WLAN load = 49% |

Message 3 - Traffic steering message: The traffic steering message (message 3) is sent from the 3GPP network 10 to the terminal 12 and is used by the 3GPP network 10 to indicate to the terminal 12 that some, or all, of the terminal's traffic should be steered to WLAN 14. The 3GPP network 10 will decide whether all or some of the terminal's bearers will be moved to one of the WLAN access points 14. In addition to the received information from the terminal 12, the 3GPP network 10 will also take into account other information available in the whole network (also from other network nodes), such as information determining radio interface load, load in backhaul, which radio capabilities are used, which radio capabilities could be used to enhance quality of service (QoS), etc. The 3GPP network 10 may also collect relevant information from other WLAN access points 14. All relevant information can be used to determine whether a move (of the traffic/bearers) should take place. The 3GPP network 10 may also request information from the possible target WLAN AP 14 over an interface between the 3GPP network 10 and WLAN nodes 14 (not shown in Figure 1) about its possibilities to serve the potential traffic.

Other procedures for mobility between 3GPP networks and WLAN that do not require the three message procedure above are also contemplated, for example procedures in which the 3GPP network sends one or more messages to the terminal to configure the terminal to switch its traffic from the 3GPP network to the WLAN if certain criteria are met and/or in which the 3GPP network otherwise configures the terminal to take measurements of the available WLANs using criteria specified by the 3GPP network.

Some background information is found in US 2013/0065585.

### SUMMARY

As seen above, dedicated traffic steering commands or policies (i.e. some form of rule for controlling traffic steering (e.g. an Access Network Discovery and Selection Function (ANDSF) policy)) can be sent from the 3GPP RAN to the terminal. For example, the 3GPP RAN can send a message (with a traffic steering command or policy) to the terminal, ordering it to route (i.e. switch) its traffic from the 3GPP RAN to a WLAN network, or ordering it to route the traffic from WLAN to the 3GPP network. However, for this (or similar) procedures to be used, it is required that a dedicated connection between the 3GPP RAN 10 and the terminal 12 is established.

It is common that in 3GPP networks, a terminal that does not have any ongoing data traffic for a certain period of time will be moved to an inactive state by the 3GPP network. This means that the 3GPP RAN generally cannot reach the terminal for control purposes. More particularly, in the event that the terminal is not transmitting/receiving any data in the 3GPP RAN for a certain period of time, the 3GPP network moves this terminal to a state (e.g., IDLE state) in which dedicated signalling between the UE and the 3GPP RAN is not possible, and hence the command-based procedure for traffic steering described above can no longer be used. So, if the 3GPP RAN has ordered the terminal to route all its traffic over WLAN and no traffic is transmitted or received over the 3GPP RAN, then the described mechanism in the 3GPP specifications will trigger the terminal to enter the state in which dedicated signalling between the UE and the 3GPP RAN is not possible. As a result, the traffic steering command procedure described above (and other procedures in which the 3GPP network needs to signal information to the terminal to enable the selection of an appropriate RAN) cannot be used.
Described herein are several techniques that allow the terminal to remain in a state where dedicated traffic steering commands can be used, even when the terminal has no transmissions or receptions of data over 3GPP RAN, such as in the case when the terminal has routed (or is routing) its traffic over WLAN. Some of the described techniques also allow the terminal to enter an inactive state when the terminal is disconnected from the WLAN or no user plane traffic detected in both 3GPP RAN and WLAN.

In a first aspect of the invention, a method in a network node as defined by independent claim 1 and a network node as defined by independent claim 7 are provided. In a second aspect of the invention, a method in a network node as defined by independent claim 9, a network node as defined by independent claim 11, a method in a terminal as defined by independent claim 12 and a terminal as defined by independent claim 14 are provided.

### BRIEF DESCRIPTION OF THE DRAWINGS

Exemplary embodiments of the techniques introduced in this document are described below with reference to the following figures, in which:
Figure 1 is a signalling diagram illustrating a technique for network controlled access selection and traffic steering;
Figure 2 illustrates an exemplary wireless terminal that is able to communicate with a Wi-Fi access point;
Figure 3 illustrates a portion of a radio access network and controller nodes;
Figure 4 illustrates a network where LTE radio access parts and a Wi-Fi wireless access point are both connected to the same P-GW;
Figure 5 illustrates a UE capable of communicating both over a 3GPP-specified access technology and also over an 802.11 Wi-Fi specified access technology;
Figure 6 illustrates an exemplary control state as a sub-state of an active state;
Figure 7 illustrates an exemplary control state 540 as a new state in addition to an active state and an inactive state;
Figure 8 is a process flow diagram illustrating an exemplary network-based process according to various embodiments;
Figure 9 is a process flow diagram illustrating a further network-based process according to various embodiments;
Figure 10 is a process flow diagram illustrating an exemplary terminal-based process according to various alternative embodiments;
Figure 11 is a block diagram of an exemplary network node according to various embodiments;
Figure 12 is a block diagram of an alternative network node according to various embodiments; and
Figure 13 is a block diagram of a terminal according to various embodiments.

### DETAILED DESCRIPTION

In the discussion that follows, specific details of particular embodiments of the present invention are set forth for purposes of explanation and not limitation. It will be appreciated by those skilled in the art that other embodiments may be employed apart from these specific details. Furthermore, in some instances detailed descriptions of well-known methods, nodes, interfaces, circuits, and devices are omitted so as not obscure the description with unnecessary detail. Those skilled in the art will appreciate that the functions described may be implemented in one or in several nodes. Some or all of the functions described may be implemented using hardware circuitry, such as analog and/or discrete logic gates interconnected to perform a specialized function, application specific integrated circuits (ASICs), programmable logic arrays (PLAs), etc. Likewise, some or all of the functions may be implemented using software programs and data in conjunction with one or more digital microprocessors or general purpose computers. Where nodes that communicate using the air interface are described, it will be appreciated that those nodes also have suitable radio communications circuitry. Moreover, the technology can additionally be considered to be embodied entirely within any form of computer-readable memory, including non-transitory embodiments such as solid-state memory, magnetic disk, or optical disk containing an appropriate set of computer instructions that would cause a processor to carry out the techniques described herein.

Hardware implementations of the present invention may include or encompass, without limitation, digital signal processor (DSP) hardware, a reduced instruction set processor, hardware (e.g., digital or analog) circuitry including but not limited to application specific integrated circuit(s) (ASIC) and/or field programmable gate array(s) (FPGA(s)), and (where appropriate) state machines capable of performing such functions.

In terms of computer implementation, a computer is generally understood to comprise one or more processors or one or more controllers, and the terms computer, processor, and controller may be employed interchangeably. When provided by a computer, processor, or controller, the functions may be provided by a single dedicated computer or processor or controller, by a single shared computer or processor or controller, or by a plurality of individual computers or processors or controllers, some of which may be shared or distributed. Moreover, the term "processor" or "controller" also refers to other hardware capable of performing such functions and/or executing software, such as the example hardware recited above.

The discussion that follows frequently refers to "UEs", which is the 3GPP term for end user wireless devices. It should be appreciated, however, that the techniques and apparatus described herein are not limited to 3GPP UEs, but are more generally applicable to end user wireless devices (e.g., portable cellular telephones, smartphones, wireless-enabled tablet computers, etc.) that are useable in cellular systems (also referred to as "terminals" herein). It should also be noted that the current disclosure relates to end user wireless devices that support, for example, both a wireless local area network (WLAN) technology, such as one or more of the IEEE 802.11 standards, and one or more wide-area cellular technologies, such as any of the wide-area radio access standards maintained by 3GPP and/or for example more than one radio access technology (RAT), for example two or more wide-area cellular technologies, such as any of the wide-area radio access standards maintained by 3GPP. End user devices are referred to in Wi-Fi document as "stations," or "STA" - it should be appreciated that the term "UE" or "terminal" as used herein should be understood to refer to a STA, and vice-versa, unless the context clearly indicates otherwise.

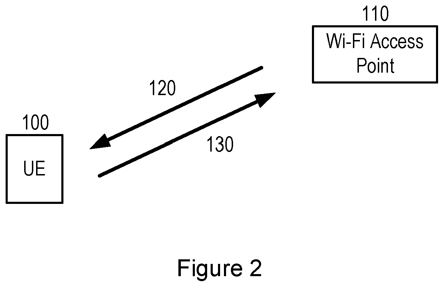

Figure 2 illustrates a wireless terminal UE 100 able to communicate, using 802.11-specified protocols, with a Wi-Fi access point 110. Downlink communication 120 is directed from the Wi-Fi access point 110 to the UE 100, while uplink communication 130 is directed from the UE 100 to the Wi-Fi access point 110. Note that while the detailed embodiments discussed herein are described in reference to the IEEE 802.11 standards commonly referred to as "Wi-Fi," the techniques and apparatus described are not necessarily limited to those standards, but may be applied more generally to other wireless local area network (WLAN) technologies.

For the UE to find an access point to connect to, a beacon signal is transmitted from the Wi-Fi access point. This beacon signal indicates details about the access point and provides the UE with enough information to be able to send a request for access. Accessing a Wi-Fi access point includes an information exchange between UE 100 and Wi-Fi Access point 110, including, for example, probe requests and responses, and authentication requests and response. The exact content of these sequences are omitted for clarity.

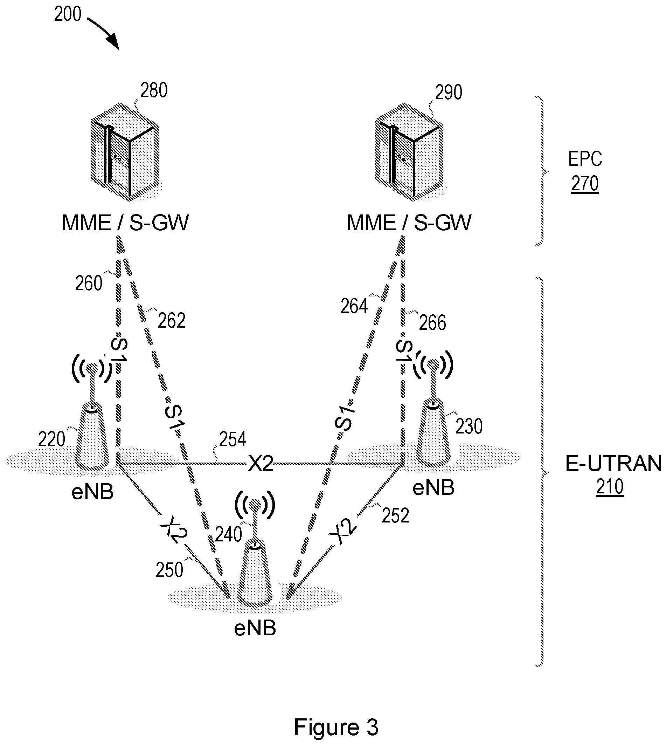

Figure 3 illustrates a portion of the LTE radio access network and controller nodes. The LTE network 200 is more formally known as the Evolved UMTS Terrestrial Radio Access Network (E-UTRAN) 210, and includes base stations 220, 230, 240, called enhanced NodeBs (eNBs or eNodeBs), which provide the E-UTRA (Evolved UMTS Terrestrial Radio Access) user plane and control plane protocol terminations towards the User Equipment (UE). It should be noted that even though LTE is used as an example of a radio access technology (RAT) herein, the procedures described herein can be applied to other wide-area RATs, including (but not limited to) other 3GPP RATs.

Referring again to Figure 3, the eNBs 220, 230, 240 are interconnected with each other by means of the X2 interface 250, 252, 254. The eNBs are also connected by means of the S1 interface 260, 262, 264, 266 to the Evolved Packet Core (EPC) 270, and more specifically to Mobility Management Entities (MMEs) 280, 290, by means of the S1-MME interface, and to the Serving Gateway (S-GW) 280, 290 by means of the S1-U interface. The S1 interface supports many-to-many relation between MMEs / S-GWs and eNBs.

The eNB hosts functionalities such as Radio Resource Management (RRM), radio bearer control, admission control, header compression of user plane data towards serving gateway, and routing of user plane data towards the serving gateway. The MME 280, 290 is the control node that processes the signalling between the UE and the core network EPC 270. The main functions of the MME 280, 290 are related to connection management and bearer management, which are handled via Non Access Stratum (NAS) protocols. The S-GW 280, 290 is the anchor point for UE mobility, and also includes other functionalities such as temporary downlink (DL) data buffering while the UE is being paged, packet routing and forwarding the right eNB, gathering of information for charging and lawful interception. A packet data network (PDN) Gateway (P-GW), not shown in Figure 3, is the node responsible for UE Internet Protocol (IP) address allocation, as well as for Quality-of-Service (QoS) enforcement.

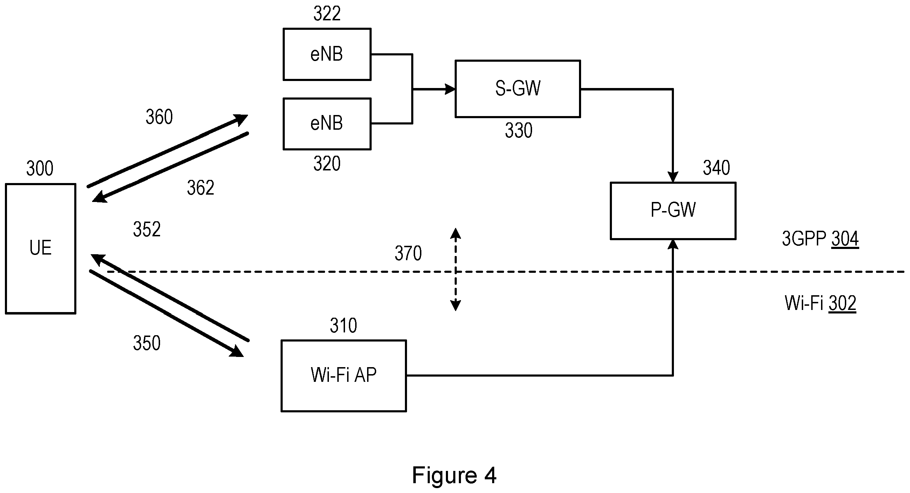

Figure 4 illustrates a network where the LTE radio access parts (eNBs) 320, 322 and a Wi-Fi wireless access point 310 are both connected to the same P-GW 340. In the case of the LTE radio access parts, the eNBs 320, 322 are connected to the P-GW 340 via an S-GW 330, A UE 300 is shown that is capable of being served both from the Wi-Fi Access Point 310 and the LTE eNBs 320, 322. Arrows 350 and 352 illustrate the uplink (UL) and downlink (DL) transmissions between the UE 300 and the Wi-Fi AP 310 respectively and arrows 360 and 362 illustrate the uplink (UL) and downlink (DL) transmissions between the UE 300 and the eNBs respectively. Figure 4 illustrates one possible way of connecting a Wi-Fi access network 302 to the same core network as the 3GPP-specified access network 304. It should be noted that the presently disclosed techniques are not restricted to scenarios where the Wi-Fi access network 302 is connected in this way; scenarios where the networks are more separate, e.g., as illustrated in Figure 2 and 3, are also possible scenarios.

There can be an interface 370 between the Wi-Fi and 3GPP domains, whereby the two networks can exchange information that can be used to facilitate on steering traffic over the right network. One example of such information exchanged via the interface 370 is load conditions in the two networks. The two networks can also exchange information with regard to the context of the UE 300, so that each can be aware of whether the UE is being served by the other network, as well as some details of the connection over the other network (e.g. traffic volume, throughput, etc...)

It should be noted that an access-point controller (AC) functionality may also exist in the Wi-Fi domain 302 that controls the Wi-Fi AP 310. This functionality, though not depicted in the figure for the sake of clarity, can be physically located in 310, 340 or another separate physical entity.

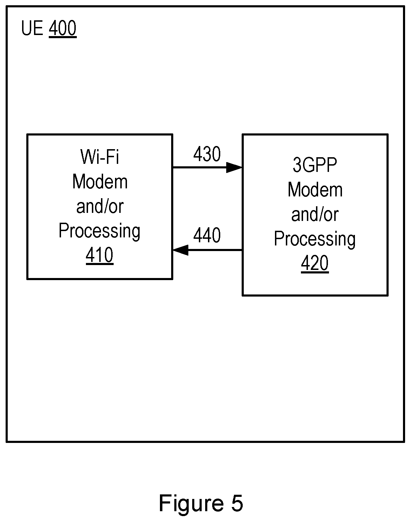

Figure 5 illustrates a UE 400 capable of communicating both over a 3GPP-specified access technology and also over an 802.11 Wi-Fi specified access technology. For illustrative purposes, the processing and modem related to the Wi-Fi parts 410 are separated from the processing and modem related to the 3GPP parts 420. It will be appreciated that the implementation of these portions could be integrated on the same hardware unit, or can be carried out using physically distinct hardware and/or hardware-software combinations.

As noted above, many smartphones on the market today support Wi-Fi connectivity in addition to supporting one or more cellular radio-access technologies (RATs), such as the several RATs standardized by 3GPP. With many of these smartphones, the Wi-Fi connection manager, which handles communications to and from Wi-Fi access points, immediately tries to attach to a Wi-Fi access point (AP) as soon as the device is within the coverage area of the AP, provided that the SSID of the Wi-Fi AP is identified/predefined and credentials are provided (usually manually). To be able to do this, the device performs Wi-Fi scanning, i.e., searching for Wi-Fi access points to connect to, on a more-or-less continuous basis. This continuous scanning drains battery power from the UE, shortening the time between re-charges.

In an operator controlled Wi-Fi scenario, a UE may usually be served with communication through the cellular 3GPP network. Occasionally, e.g., when moving indoors, or when cellular performance deteriorates and there is good Wi-Fi coverage, it would be advantageous, from a network-performance perspective or a user-experience perspective, or both, for the UE to receive services through Wi-Fi instead of through the 3GPP radio access network. In scenarios where a UE is currently being served by a 3GPP network, it is not necessary for a UE to continuously scan for Wi-Fi access points whenever Wi-Fi operation is enabled. Likewise, when the UE is connected to a Wi-Fi access point, it need not necessarily search out other connection means on a continuous basis.

To address these problems, mechanisms have been provided for overcoming the shortcoming of having UEs that are capable of providing service through both a 3GPP-specified radio access and a Wi-Fi wireless access technology, in situations when the UE is connected to one, from continuously scanning for access opportunities of the other.

One such mechanism is the mobility procedure described above and illustrated in Figure 1. In this mechanism, to enable a 3GPP Radio Access Network (RAN) 10 to be in control of a terminal's WLAN connection, dedicated traffic steering commands (message 3) or policies can be sent from the 3GPP RAN 10 to the terminal 12. For example, the 3GPP RAN 10 can send a message 3 (with a traffic steering command or policy) to the terminal 12, ordering it to route (switch) its traffic from the 3GPP RAN 10 to a WLAN network 14, or ordering it to route (switch) the traffic from WLAN 14 to the 3GPP network 10. However, for this procedure to be used, it is required that a dedicated connection between the 3GPP RAN 10 and the terminal 12 is established.

In the event that the terminal 12 is not transmitting/receiving any data in the 3GPP RAN 10 for a certain period of time, the 3GPP network moves this terminal 12 to a state (e.g., IDLE state) in which dedicated signalling between the UE 12 and the 3GPP RAN 10 is not possible, and hence the procedure described above can no longer be used.

So, if the 3GPP RAN 10 has ordered the terminal 12 to route all its traffic over WLAN 14 and no traffic is transmitted or received over the 3GPP RAN 10, then the described mechanism in the 3GPP specifications will trigger the terminal 12 to enter the state in which dedicated signalling between the UE 12 and the 3GPP RAN 10 is not possible. As a result, the traffic steering command procedure described above cannot be used.

Similar problems occur in other procedures for managing the mobility between 3GPP networks and WLAN in which the 3GPP network needs to use dedicated signalling to communicate with the terminal, for example procedures in which the 3GPP network sends one or more messages to the terminal to configure the terminal to switch its traffic from the 3GPP network to the WLAN if certain criteria are met and/or in which the 3GPP network otherwise configures the terminal to take measurements of the available WLANs using criteria specified by the 3GPP network.

Described below are several techniques that allow the terminal to remain in a state where dedicated signalling (e.g. dedicated traffic steering commands) can be used, even when the terminal has no transmissions or receptions of data over 3GPP RAN, such as in the case when the terminal has routed (or is routing) its traffic over WLAN.

As noted above in the Summary section, in a first embodiment of these techniques, this is realized by having the 3GPP RAN adjust timers in a way such that triggering of the process of moving a terminal to a state without possibility of transmission of dedicated traffic steering commands to the terminal is impossible or very unlikely. In a related approach, the actions associated with timer expiry are changed such that triggering of the process of moving a terminal to a state in which dedicated signalling between the UE and the 3GPP RAN is not possible is prevented.

In a second embodiment of the techniques, the terminal is adapted to refrain from entering a state in which dedicated signalling between the UE and the 3GPP RAN is not possible when it is necessary for the 3GPP RAN to retain control over the UE.

For the sake of simplicity, the list below introduces some terms which will be used throughout this document:
- Active state - A state of the terminal in which dedicated signalling between the terminal and the wide-area RAN (e.g., the 3GPP RAN) is possible. Examples of such states are: CELL_FACH and CELL_DCH in UMTS, and RRC_CONNECTED in LTE (with RRC representing Radio Resource Control).
- Inactive state - A state of the terminal in which dedicated signalling between the terminal and the wide-area RAN (e.g., the 3GPP RAN) is not possible. Examples of such states are: URA_PCH, CELL_PCH and Idle Mode in UMTS, and RRC IDLE in LTE.

At various points in this document it may be mentioned that a terminal is "connected" to WLAN. It should be appreciated that being connected to WLAN can mean any of several different things, as exemplified by the existence of one or more of the below conditions:
- 802.11 authentication (Authentication to the WLAN AP) has been completed or is underway;
- 802.1x extensible authentication protocol for subscriber identity module (EAP-SIM) authentication (Authentication to the authentication, authorization and accounting (AAA)-servers) has been completed or is under way;
- Four way hand-shake between the terminal and the WLAN network has been completed;
- An IP address has been assigned to the terminal in WLAN;
- a packet data network (PDN) connection has been established through the WLAN network, i.e., a connection between the terminal and the PDN gateway;
- Data traffic has been started through the WLAN network.

Examples of messages indicating to the UE that it should be moved to an inactive state are:
- RRCConnectionRelease. As specified in section 5.3.8 of 3GPP TS 36.331 v11.1.10;
- Radio Bearer Reconfiguration. As specified in section 8.2 in 3GPP TS 25.331, v. 11.5.0.

### A control state in 3GPP

In the 3GPP states described above, the terminal has both user plane and control plane connections to the RAN when in an active state, and has neither when in an inactive state. The user plane carries the data traffic and the control plane is used to configure the terminal. In certain circumstances, e.g., in the embodiments above when 3GPP RAN is used for control purposes only (e.g. control of a terminal's WLAN connection (through signalling from the 3GPP RAN to the terminal) after the terminal has moved its traffic to the WLAN), it is desirable for the terminal to be in a state in which it has a control plane connection, but not necessarily a user plane connection. Such a state is referred to as a *control state* in this document. The control state may be either a sub-state of the active state in which there is no user plane traffic or a new state with no user plane connectivity.

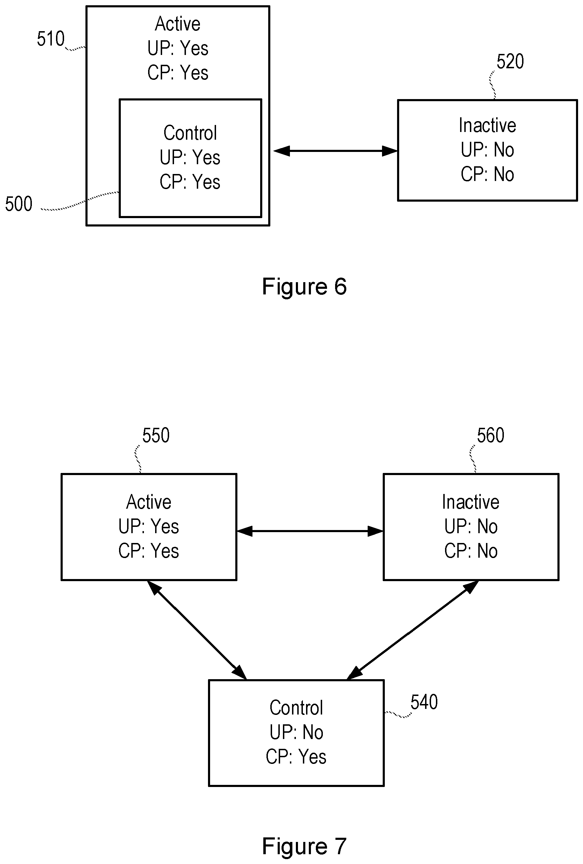

In the example shown in Figure 6, the control state 500 is a sub-state of the active state 510, where the terminal has both user plane (UP) and control plane (CP) connections to the 3GPP RAN, but no user plane traffic. In the inactive state 520, the terminal has neither UP nor CP connections to the 3GPP RAN. In this case, existing 3GPP procedures, i.e. as specified in 3GPP TS 25.304 v11.4.0 (2013-09) and 3GPP TS 36.304 v11.5.0 (2013-09), may be followed to maintain UE contexts, handling mobility, etc. However, a new mechanism is required to keep the terminal in the active state 510. It is also possible to reduce the terminal contexts in 3GPP when no data traffic exists.

In the example illustrated in Figure 7, the control state 540 is a new state in addition to the active state 550 and inactive state 560, where the terminal has only a control plane connection and no user plane connection. For user plane data transmission, the user plane connection has to be established for the terminal. When only a control plane connection is maintained, UE contexts in the 3GPP network (RAN and/or core networks) may be minimized. For example, there may be no default bearer in LTE and no primary packet data protocol (PDP) context in UMTS. It is also possible that the default bearer is kept, but UE contexts in (e)NB and/or radio network controller (RNC) is minimized.

In either case, with a user plane connection but no user plane traffic, the control state 500, 540 is a special case of the active state 510, 550, but with no active data traffic. Current 3GPP procedures will change the terminal to the inactive state 520, 560 when no data activity is detected for a while. Methods are described below to avoid the terminal entering the inactive state 520, 560. Once the control plane connection is not needed anymore, the methods allow the terminal to transit to the inactive state 520, 560.

In the following description of the various solutions provided by the present disclosure, the arrangement shown in Figure 4 is used as a basis for the explanation, and references in the description below to a terminal/UE, eNB, 3GPP network, Wi-Fi AP and WLAN are to the UE 300, eNB 320, 3GPP network 304, Wi-Fi AP 310 and WLAN 302 shown in Figure 4. However, it will be appreciated that the various solutions provided by the present disclosure are not limited to implementation in the arrangement shown in Figure 4.

### Network based solution for avoiding terminal to enter inactive state

According to several network-based solutions contemplated by the present disclosure, a RAN network node 320, e.g., an eNB, a base station or Radio Network Controller (RNC), will perform one or more operations to avoid that a WLAN connected terminal 300 enters an inactive state.

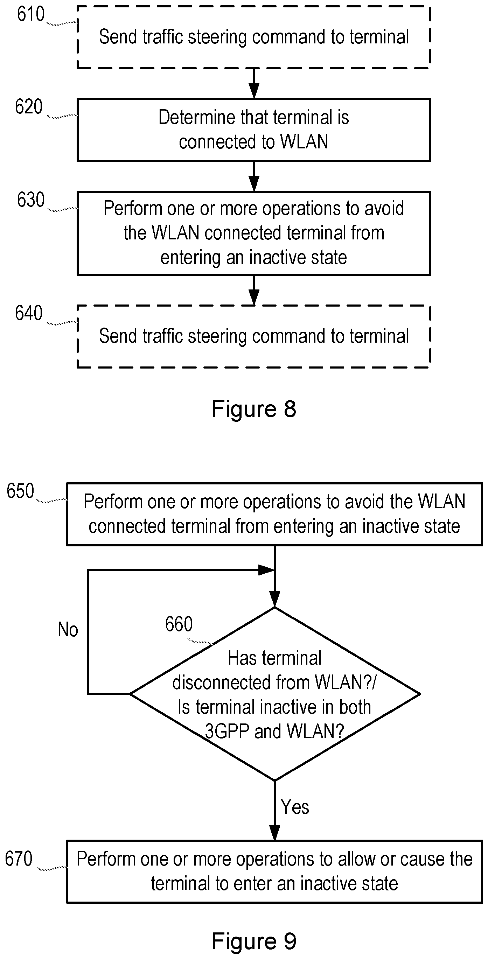

Figure 8 is a process flow diagram illustrating an example process according to the network-based techniques described above, as implemented in a RAN node 320. As shown at block 610, the illustrated method begins with the sending of a traffic steering command to the terminal 300, indicating that the terminal 300 should steer its traffic towards a WLAN 302. It will be appreciated that the terminal's behaviour may be commanded by a node other than the node carrying out the other operations of Figure 8, or that the terminal 300 may connect to the WLAN 302 for other reasons, in some embodiments - for that reason, block 610 is outlined with a dashed line to indicate that this operation is "optional."

The method continues, as shown at block 620, with determining whether the terminal 300 is connected to a WLAN 302. Various ways of implementing block 620 are described in more detail below.

If the terminal 300 is connected to a WLAN 302, then, as shown at block 630, the network node 320 performs one or more operations to avoid that the WLAN connected terminal enters an inactive state, with respect to the first network 304. Various ways of implementing block 630 are described in more detail below.

Some particular ways of implementing block 630 provide that operation of an inactivity timer is adjusted, so that a trigger operation to move the terminal 300 to an inactive state, with respect to the first network 304, is unlikely or impossible. Several variations of adjusting operation of an inactivity timer are described below.

Finally, as shown at block 640, another traffic steering command is sent to the terminal 300, indicating that the terminal 300 should steer its traffic toward the RAN node 320. It will be appreciated that this command would not be possible if the terminal 300 had been permitted to enter an inactive state with respect to the RAN 304. It will also be appreciated that this command may be sent by a node other than the node performing the operations at block 620 and 630; accordingly, block 640 is also outlined with a dashed line, indicating that this step is "optional."

As noted above, in some embodiments block 630 can be implemented by having a network node 320 configure an inactivity timer, which is used for triggering the process of moving the terminal 300 from an active state to an inactive state, in a certain way. The timer could, for example, be configured in one or more of the following ways:
- Set the timer value to infinity (or to a value that is interpreted by the timer so that the timer never expires);
- Set the timer value such that it is unlikely that it will expire before it is restarted. For example, there may be signalling of messages between the terminal 300 and the 3GPP network 304 also when the terminal 300 is connected to WLAN 302, so if the timer is set to a value larger than the expected inter-arrival time of the messages between the terminal 300 and the 3GPP network 304 then the timer will generally be restarted before expiring.
- Disable the timer.
- Reset the timer when ongoing communication is indicative of an active connection between the terminal 300 and WLAN 302 (e.g. data is being transmitted between the terminal 300 and WLAN 302). There are many different ways that the 3GPP network 304 can be aware of the ongoing communication, e.g., explicit signalling between the WLAN AP 310 and eNB 320, or between the UE 300 and eNB 320.

It should be appreciated that there may be multiple inactivity timers that the procedures described herein can be applied to. For example, one timer may be used for moving a terminal 300 from the state CELL_DCH to the state URA_PCH and another timer may be used to move the terminal 300 to the state IDLE from any other state. The techniques described herein may be applied to all or a subset of these timers.

Another way to realize block 630 in the network-based approach is to adapt the network node 320 so that it refrains from sending a command ordering the terminal 300 to go to an inactive state when the associated timer expires, for example, if the timer that controls when a terminal 300 is moving from CELL_DCH to Idle Mode expires, a network node 320 adapted according to this approach will refrain from sending a command ordering the terminal 300 to go to IDLE.

Different possibilities exist for the 3GPP network 304 to determine whether the terminal 300 is connected to WLAN 302 in block 620. Below are listed a few examples that may or may not be used in combination:
- Based on a WLAN status report from the terminal 300. For example, the UE 300 may signal, to the 3GPP network 304, information regarding its connection to WLAN 302. For instance, the terminal 300 may signal a WLAN status report upon connection to WLAN 302.
- If the 3GPP network 304 is in control of when the terminal 300 should connect to and in control of when the terminal 300 should disconnect from WLAN 302, the 3GPP network 304 will then know, e.g., based on (e.g. traffic steering) commands sent to the UE 300 and/or on receipt of an indication from the UE 300 that the commands have been applied, whether the UE 300 is connected to WLAN 302 or not.
- Based on information received from the core network.

### Enabling a terminal to enter an inactive state

Following the process above in which the WLAN connected terminal is prevented from entering an inactive state, if the terminal 300 is disconnected to WLAN 302 or is inactive in both 3GPP 304 and WLAN 302 for some time (i.e. there has been no data transmission for a predetermined period), it may be desired to enter an inactive state to save network resources and reduce battery consumption.

Figure 9 shows an exemplary process flow diagram in a network node 320 that implements this functionality. Following a block 650 in which the network node 320 performs one or more operations to avoid the WLAN connected terminal from entering an inactive state (as described above with reference to block 630 of Figure 8), the network node 320 determines, in one embodiment, whether the terminal 300 has disconnected from the WLAN 302, and in another embodiment, whether the terminal 300 is inactive in both the WLAN 302 and 3GPP network 304 (block 660). If the terminal 300 has disconnected from the WLAN 302, or the terminal 300 is inactive in both the WLAN 302 and 3GPP network 304 (as appropriate), the network node 320 performs one or more operations to allow or cause the terminal 300 to enter an inactive state (block 670).
As noted above, in some embodiments, the one or more operations in block 670 are performed upon disconnection from the WLAN 302, for example. Upon knowing that the terminal 300 is not connected to WLAN 302 (anymore), the network node 320 can (again) allow the terminal 300 to be moved to an inactive state (if, for example, no user traffic occurs between the 3GPP network 304 and the terminal 300) by, for example, using one or more of the following alternatives:
- Set the timer value to a finite value that is suitable for a UE 300 not connected to WLAN 302. For example, if the 3GPP network 304 used timer value T1 prior to the UE 300 being connected to WLAN 302, and when the UE 300 connected to WLAN 302 it was set to T2, then according to this alternative the timer value can be set to T1 again upon the 3GPP network 304 knowing that the terminal 300 is no longer connected to WLAN 302. Note that the 3GPP network 304 may set the timer to another value than T1 upon knowing that the terminal 300 is no longer connected to WLAN 302, if deemed suitable.
- Enable the timer.

Also as noted above, in some embodiments, the one or more operations in block 670 to move the terminal 300 into an inactive state are performed when the terminal 300 has become inactive in both the 3GPP RAN 304 and WLAN 302. Upon knowing that the terminal 300 is not active in WLAN 302 for a long period, the network node 320 may allow the terminal 300 to enter the inactive state. The mechanism to allow the state change can be the same as described above for the case when the terminal 300 disconnects from the WLAN 302.

Terminal activity information may be communicated from WLAN 302 to 3GPP RAN 304 in a couple of ways, e.g.:
- Based on a WLAN traffic activity report from the terminal 300;
- Via an X2 type link between (e)NB/RNC 320 and WLAN AP/gateway 310; and/or
- Based on information from a core network in which the WLAN 302 is integrated.

In one embodiment, the terminal activity information may be an inactivity indicator. In this case, the terminal inactivity in WLAN 302 is determined by the WLAN 302, e.g., using an inactivity timer located in WLAN 302, WLAN 302 will inform 3GPP RAN 304 that the terminal 300 is inactive in WLAN 302, e.g., upon expiry of the timer. In another embodiment, the exchanged information is an indicator that the terminal 300 is still active in WLAN 302. Then 3GPP RAN 304 uses the signalled WLAN activity to determine when the terminal 300 should enter the inactive state.

One advantage of the techniques in this section is that in some situations 3GPP 304 has only control over which RAT the terminal 300 should use for communication but no control right to disconnect the terminal 300 from WLAN 302. The techniques avoid a situation where the terminal 300 is connected to 3GPP 304 but has no active traffic at all in both RATs.

Another advantage is that in some situations the 3GPP network 304 may not need to control how the terminal 300 is handling WLAN 302, in which case it could allow the UE 300 to enter an inactive state, e.g., to save power and to decrease load in the RAN 304 (both signalling and processing load). Instead the 3GPP network 304 may only require keeping control over the terminal 300 when the terminal 300 has ongoing traffic in WLAN 302. In other words, if the 3GPP network 304 has indicated that the terminal 300 should connect to WLAN 302 but the terminal 300 has no ongoing traffic in WLAN 302, then the 3GPP network 304 may leave it up to terminal 300 implementation (or other procedures) how the terminal's WLAN connection should be handled. The techniques are also useful when the 3GPP RAN 304 has only control over which RAT the UE 300 should use for communication but no control right to disconnect the UE 300 from WLAN 302.

### Terminal based solution for avoiding terminal to enter inactive state

In an alternative to the above approaches, a terminal 300 is adapted or configured so that it will, when connected to WLAN 302, refrain from entering an inactive state even if indicated so by the network 304. In a variant of this approach, the terminal 300 indicates to the 3GPP RAN 304 that it is refraining from entering an inactive state. For example, this indication could be sent to the 3GPP RAN 304 when the UE 300 receives, from the 3GPP RAN 304, a command indicating that the terminal 300 should enter an inactive state.

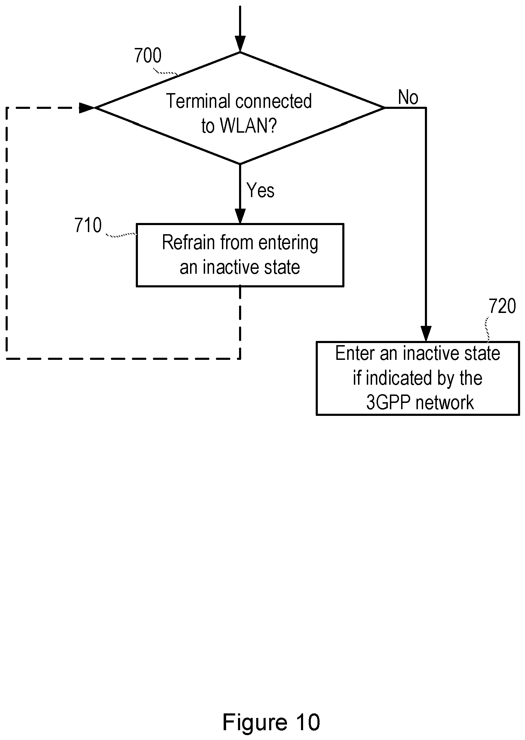

Figure 10 shows an exemplary process flow diagram in a terminal 300 that implements this functionality. In a block 700, it is determined if the terminal 300 is connected to a WLAN 302. If the terminal 300 is connected to a WLAN 302, the terminal 300 refrains from entering an inactive state with respect to the 3GPP network 304 (block 710), for example by refraining from entering an inactive state even if indicated so by the 3GPP network 304, or by the terminal 300 indicating to the 3GPP RAN 304 that it is refraining from entering an inactive state.

If at block 700 it is determined that the terminal 300 is not connected to a WLAN 302, the terminal 300 is configured to operate normally and enter an inactive state if indicated to do so by the 3GPP network 304 (block 720).

If, following block 710 in which the terminal 300 refrains from entering an inactive state, the terminal 300 subsequently disconnects from the WLAN 302 or the terminal 300 is inactive in both the WLAN 302 and 3GPP network 304 (as determined by repeating block 700), the terminal 300 can return to operating normally and enter an inactive state if indicated by the 3GPP network 304 (block 720).

Thus, in some embodiments, upon disconnection from a WLAN network 302, a terminal 300 adapted or configured according to this approach (i.e. configured according to block 710) will enable itself to enter an inactive state (block 720). The terminal 300 will subsequently follow the 3GPP network's indications to do so.

In another alternative implementation of block 710, the terminal 300 can indicate to the 3GPP RAN 304 that terminal 300 does not wish to be moved to an inactive state with respect to the 3GPP RAN 304 and, if so, the 3GPP RAN 304 refrains from moving the terminal 300 to an inactive state. The terminal 300 could indicate so, e.g., upon connection to WLAN 302.

If the terminal 300 is configured to refrain from entering an inactive state, the terminal 300 could, upon disconnection from a WLAN 302, indicate to the 3GPP RAN 304 at block 720 that the 3GPP RAN 304 can move the terminal 300 to inactive state and if so, 3GPP RAN 304 may subsequently move the terminal 300 to the inactive state (if deemed suitable by the 3GPP RAN 304).

### Methods for power savings for UE in active state

As discussed above, keeping the UE 300 always connected to 3GPP RAN 304 (i.e. by preventing the UE 300 from entering an inactive state) will make it possible for the 3GPP RAN 304 to have dedicated control in steering traffic sent by the UE 300 from WLAN 302 back to 3GPP RAN 304. However, keeping both 3GPP radio and WLAN radio active can drain the UE battery. Accordingly, in another embodiment of this invention, in addition to setting the inactivity timer for the UE 300 that is connected to WLAN 302 to a different value (or performing one or more other operations to avoid the UE 300 from entering an inactive state), the 3GPP RAN 304 also configures the UE 300 with a discontinuous reception (DRX) configuration in order to reduce the UE battery consumption. This can be achieved by setting the DRX cycle value to a longer value, i.e. 2560 ms as the largest value specified in 3GPP TS 36.321 v11.3.0 (2013-06) or/and setting a shorter "on duration" timer, i.e. less than 10 ms in the range specified in 3GPP TS 36.321, so that the UE 300 will be mostly in a sleeping state. During the on duration, the UE 300 will be able to perform measurements and if the conditions for sending measurement reports (e.g. terminal reports as described above) are fulfilled it can request uplink resources for sending the measurement to 3GPP RAN 304.

Alternatively, the UE 300 might be configured to send all traffic to 3GPP RAN 304 (i.e., move traffic from WLAN 302 to the 3GPP RAN) immediately upon fulfilment of the previously specified (or predetermined) conditions, rather than sending measurement reports to 3GPP RAN 304. The conditions for triggering measurements or immediate sending of all traffic from WLAN 302 to 3GPP RAN 304 can be either broadcast or communicated to the UE 300 in a dedicated fashion by the 3GPP RAN 304. Once the UE 300 start sending all traffic to the 3GPP RAN 304, the DRX settings can be modified to reflect this (e.g., turn DRX off, decrease the DRX cycle length, etc...).

Note that sending of traffic to WLAN 302 doesn't necessarily have to be complete. For example, it might be decided to run some background traffic over WLAN 302 while routing the traffic with the most stringent quality requirements over 3GPP. When the decision is made to do such partial sending of traffic to WLAN 302, the 3GPP RAN 304 will configure the UE 300 with DRX settings that are appropriate for the traffic that is being handled via 3GPP RAN 304, as already indicated above, rather than setting them to longer values as proposed above.

Advantages of various embodiments of the presently disclosed techniques (including the network-based and terminal-based techniques described above) include that these techniques can be used to allow a terminal supporting 3GPP to remain in connected mode even when the terminal's traffic has been steered to WLAN and no traffic is carried over 3GPP. This allows the 3GPP network to maintain the control over the terminal with dedicated commands, for example to carry out mobility procedures.

### Apparatus

Although the described solutions may be implemented in any appropriate type of telecommunication system supporting any suitable communication standards and using any suitable components, network-based embodiments of the described solutions may be implemented in one or more nodes of a radio access network (RAN), such as a node in a 3GPP RAN network, such as LTE. These nodes include, but are not limited to, an eNodeB in an LTE network, or a base station or RNC in a UMTS network.

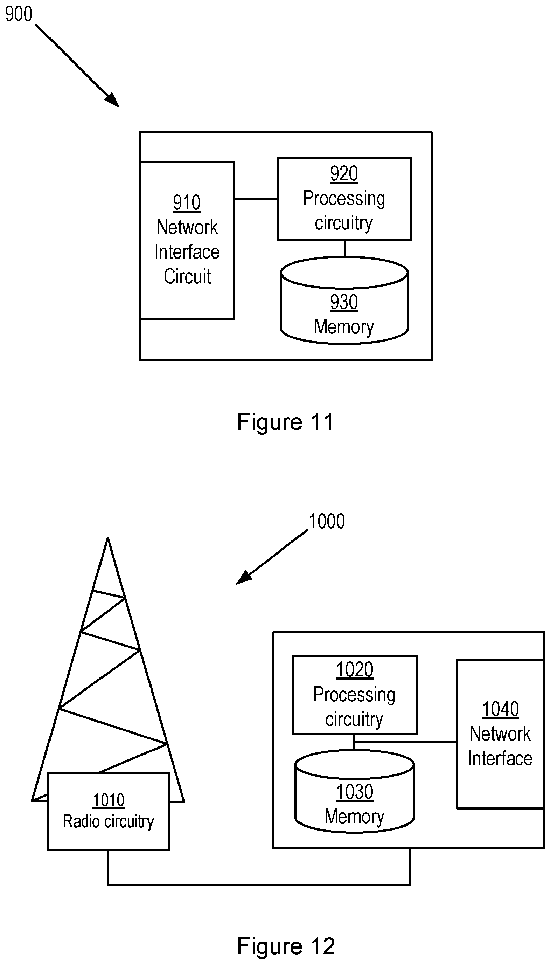

The network in which these techniques are implemented may further include any additional elements suitable to support communication between wireless devices or between a wireless device and another communication device (such as a landline telephone). Although the illustrated network nodes may represent a network communication device that includes any suitable combination of hardware and/or software, these network nodes may, in particular embodiments, represent a device such as the example network node 900 illustrated in greater detail by Figure 11. Similarly, although the illustrated base station nodes (e.g., an eNB) may represent network nodes that include any suitable combination of hardware and/or software, these network nodes may, in particular embodiments, represent devices such as the example network node 1000 illustrated in greater detail by Figure 12.

As shown in Figure 11, the example network node 900 includes processing circuitry 920, a memory 930, and network interface circuitry 910. In particular embodiments, some or all of the functionality described above as being provided by a core network node or a node in a RAN may be provided by the processing circuitry 920 executing instructions stored on a computer-readable medium, such as the memory 930 shown in Figure 11. Alternative embodiments of the network node 900 may include additional components beyond those shown in Figure 11 that may be responsible for providing certain aspects of the node's functionality, including any of the functionality described above and/or any functionality necessary to support the solutions described above.

As shown in Figure 12, an example base station 1000 includes processing circuitry 1020, a memory 1030, radio circuitry 1010, and at least one antenna. The processing circuitry 1020 may comprise RF circuitry and baseband processing circuitry (not shown). In particular embodiments, some or all of the functionality described above as being provided by a mobile base station, a radio network controller, a base station controller, a relay node, a NodeB, an enhanced NodeB, and/or any other type of mobile communications node may be provided by the processing circuitry 1020 executing instructions stored on a computer-readable medium, such as the memory 1030 shown in Figure 12. Alternative embodiments of the network node 1000 may include additional components responsible for providing additional functionality, including any of the functionality identified above and/or any functionality necessary to support the solution described above.

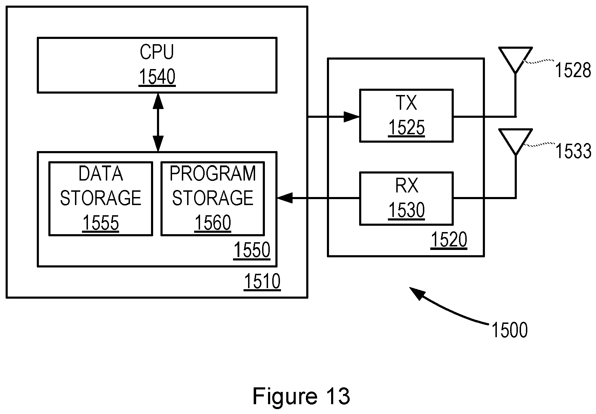

Several of the terminal-based techniques and methods described above may be implemented using radio circuitry and electronic data processing circuitry provided in a terminal. Figure 13 illustrates features of an example terminal 1500 according to several embodiments of the present invention. Terminal 1500, which may be a UE configured for operation with an LTE network (E-UTRAN) and that also supports Wi-Fi, for example, comprises a transceiver unit 1520 for communicating with one or more base stations as well as a processing circuit 1510 for processing the signals transmitted and received by the transceiver unit 1520. Transceiver unit 1520 includes a transmitter 1525 coupled to one or more transmit antennas 1528 and receiver 1530 coupled to one or more receiver antennas 1533. The same antenna(s) 1528 and 1533 may be used for both transmission and reception. Receiver 1530 and transmitter 1525 use known radio processing and signal processing components and techniques, typically according to a particular telecommunications standard such as the 3GPP standards for LTE. Note also that transmitter unit 1520 may comprise separate radio and/or baseband circuitry for each of two or more different types of radio access network, such as radio/baseband circuitry adapted for E-UTRAN access and separate radio/baseband circuitry adapted for Wi-Fi access. The same applies to the antennas -while in some cases one or more antennas may be used for accessing multiple types of networks, in other cases one or more antennas may be specifically adapted to a particular radio access network or networks. Because the various details and engineering tradeoffs associated with the design and implementation of such circuitry are well known and are unnecessary to a full understanding of the invention, additional details are not shown here.

Processing circuit 1510 comprises one or more processors 1540 coupled to one or more memory devices 1550 that make up a data storage memory 1555 and a program storage memory 1560. Processor 1540, identified as CPU 1540 in Figure 13, may be a microprocessor, microcontroller, or digital signal processor, in some embodiments. More generally, processing circuit 1510 may comprise a processor/firmware combination, or specialized digital hardware, or a combination thereof. Memory 1550 may comprise one or several types of memory such as read-only memory (ROM), random-access memory, cache memory, flash memory devices, optical storage devices, etc. Because terminal 1500 supports multiple radio access networks, processing circuit 1510 may include separate processing resources dedicated to one or several radio access technologies, in some embodiments. Again, because the various details and engineering tradeoffs associated with the design of baseband processing circuitry for mobile devices are well known and are unnecessary to a full understanding of the invention, additional details are not shown here.

Typical functions of the processing circuit 1510 include modulation and coding of transmitted signals and the demodulation and decoding of received signals. In several embodiments of the disclosed techniques, processing circuit 1510 is adapted, using suitable program code stored in program storage memory 1560, for example, to carry out one of the techniques described above for access network selection. Of course, it will be appreciated that not all of the steps of these techniques are necessarily performed in a single microprocessor or even in a single module.

A draft discussion document to be released for standardization purposes is attached to the present document as Appendix A. This Appendix A forms an integral part of the present disclosure.

It will be appreciated by the person of skill in the art that various modifications may be made to the above described embodiments without departing from the scope of the presently disclosed techniques. For example, it will be readily appreciated that although the above embodiments are described with reference to parts of a 3GPP network, embodiments will also be applicable to like networks, such as a successor of the 3GPP network, having like functional components. Therefore, in particular, the terms 3GPP and associated or related terms used in the above description and in the enclosed drawings and any appended claims now or in the future are to be interpreted accordingly.

Examples of several embodiments have been described in detail above and are summarized below, with reference to the attached illustrations of specific embodiments. Because it is not possible, of course, to describe every conceivable combination of components or techniques, those skilled in the art will appreciate that the presently disclosed techniques can be implemented in other ways than those specifically set forth herein. The present embodiments are thus to be considered in all respects as illustrative and not restrictive.

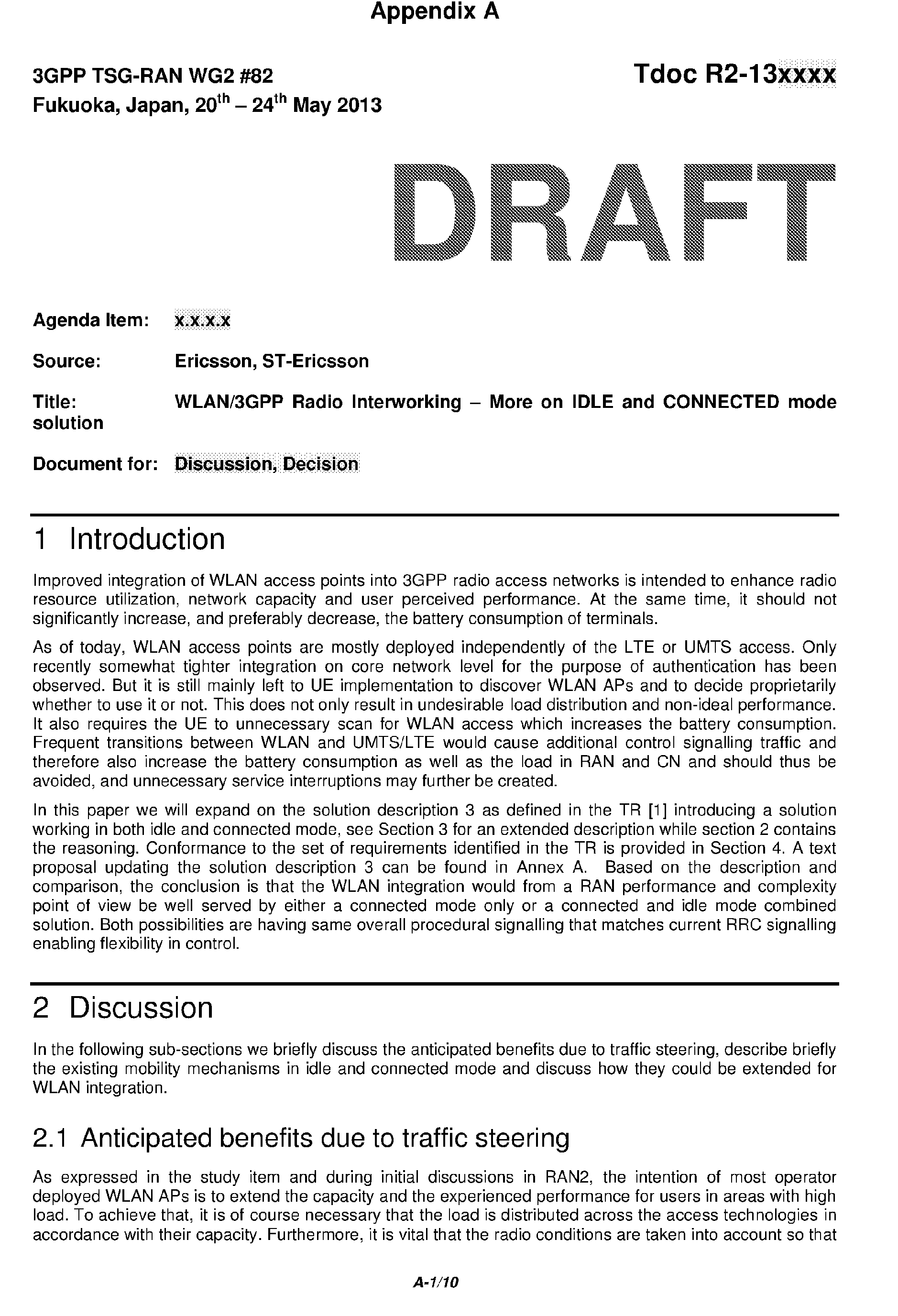

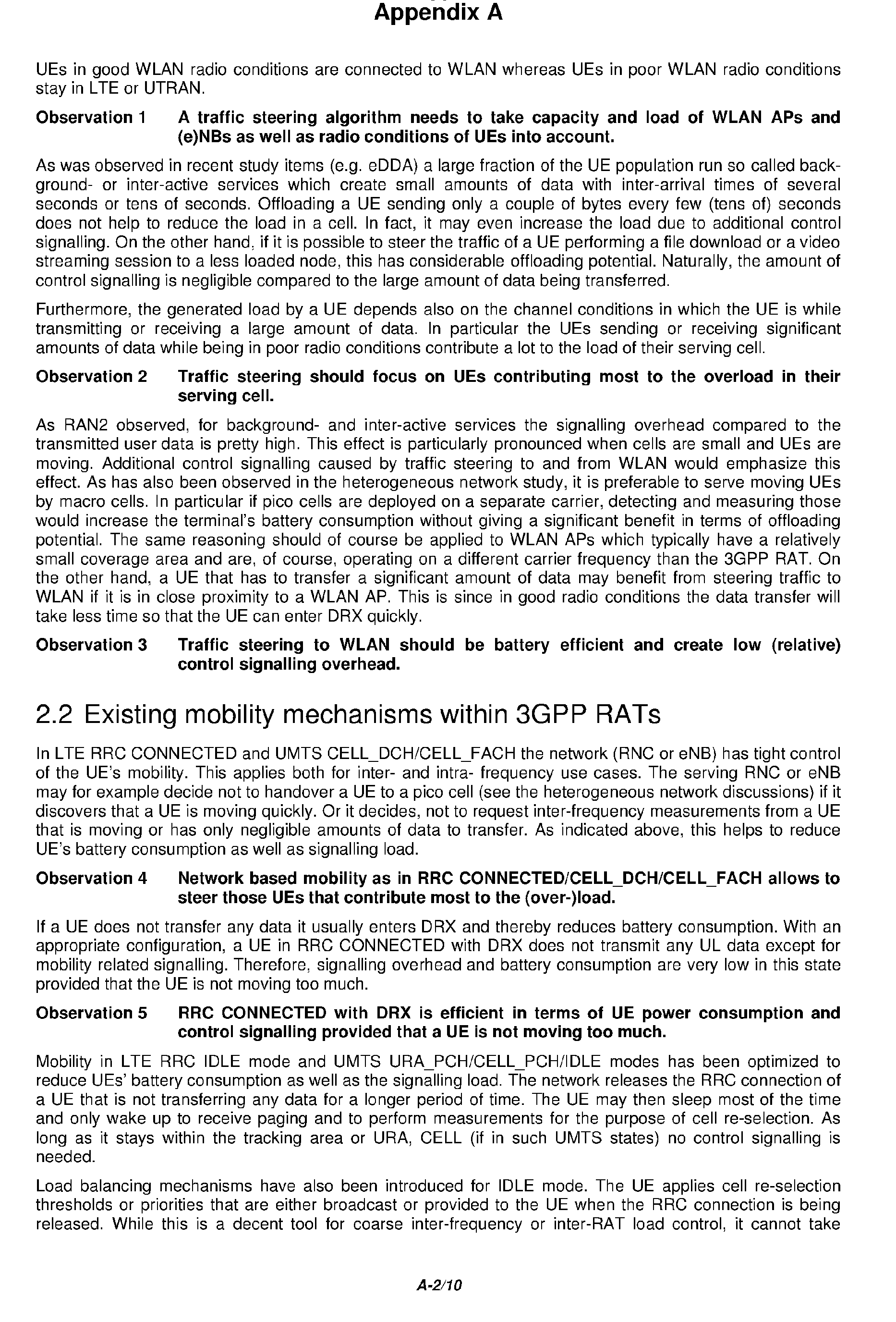

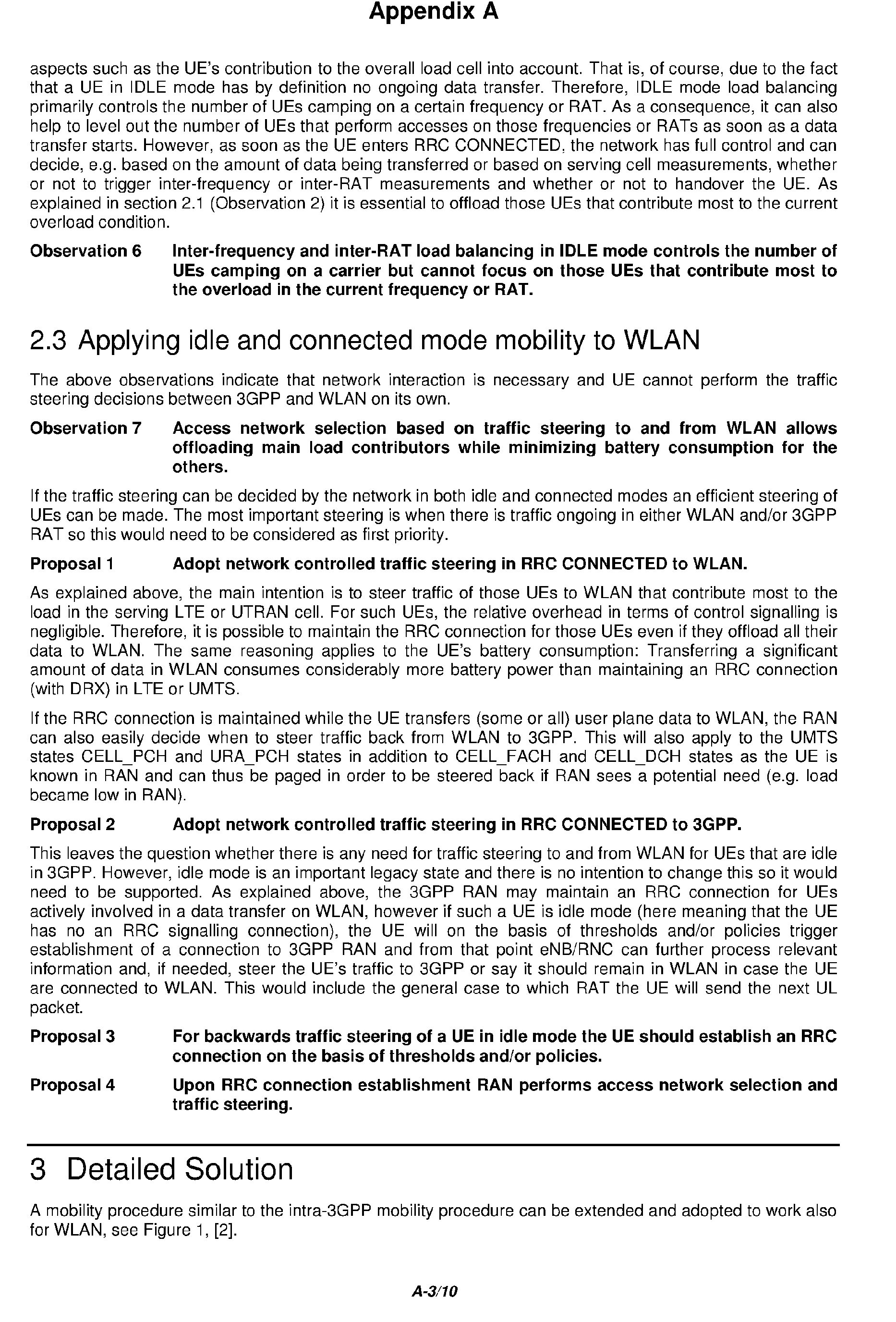

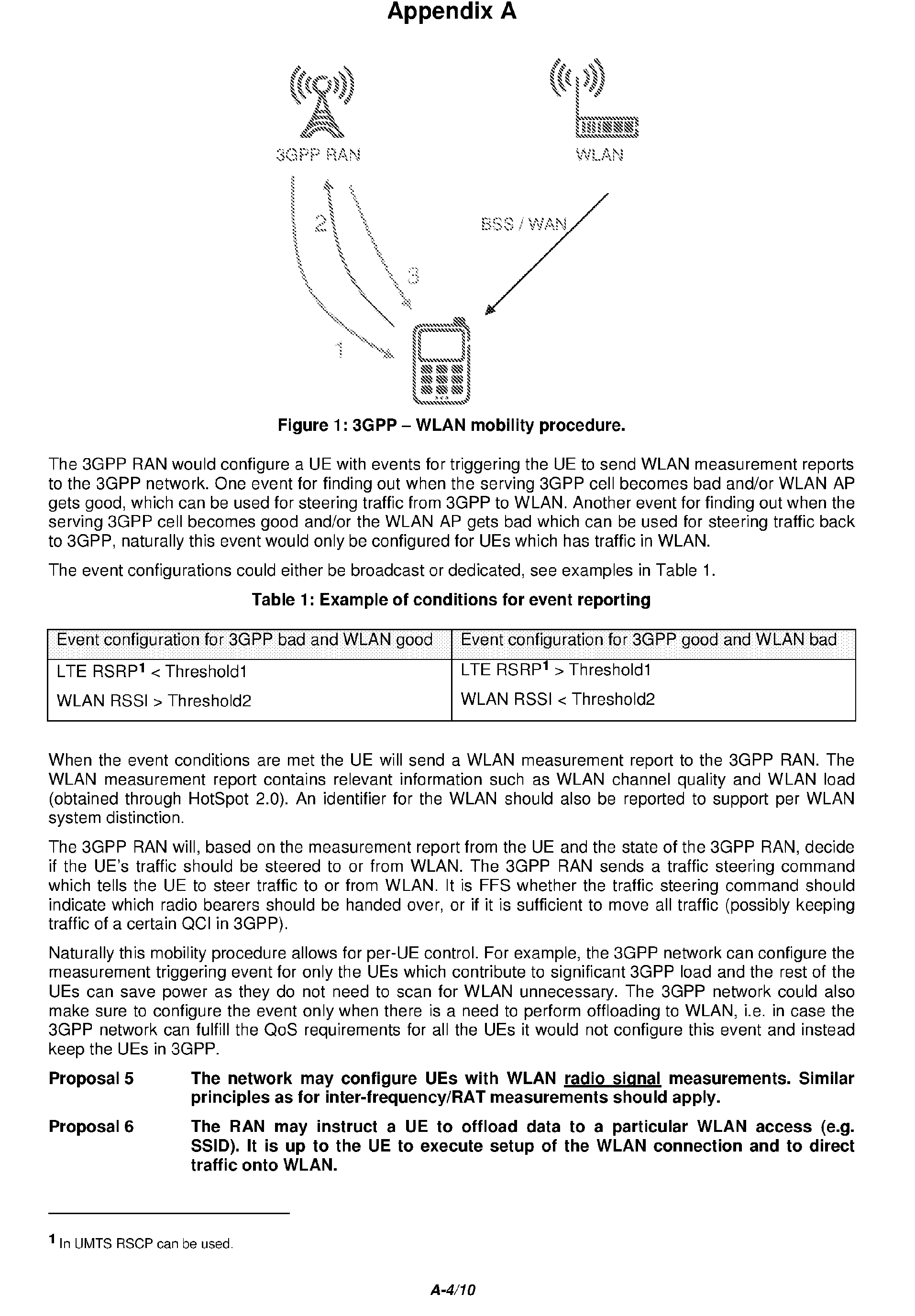

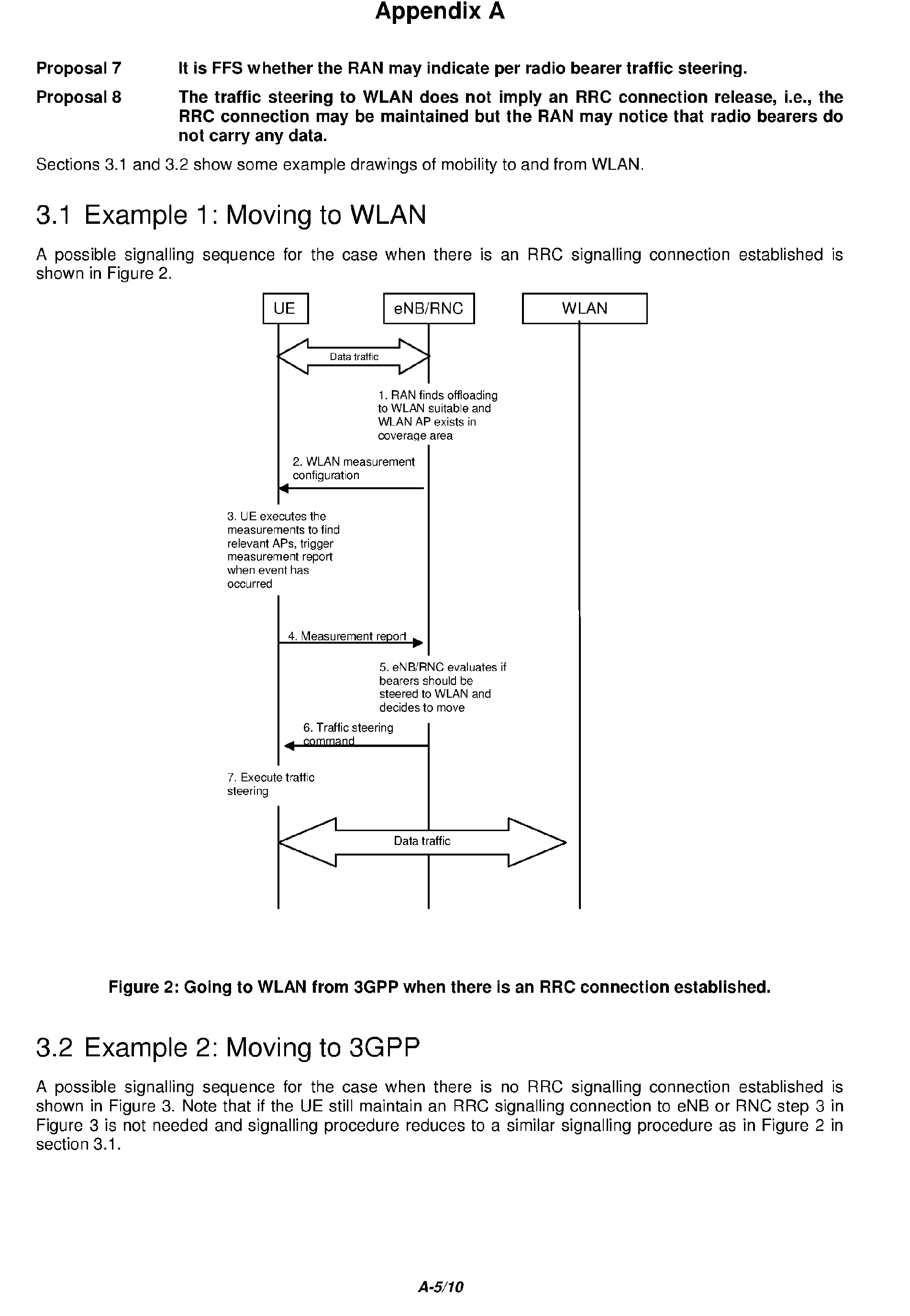

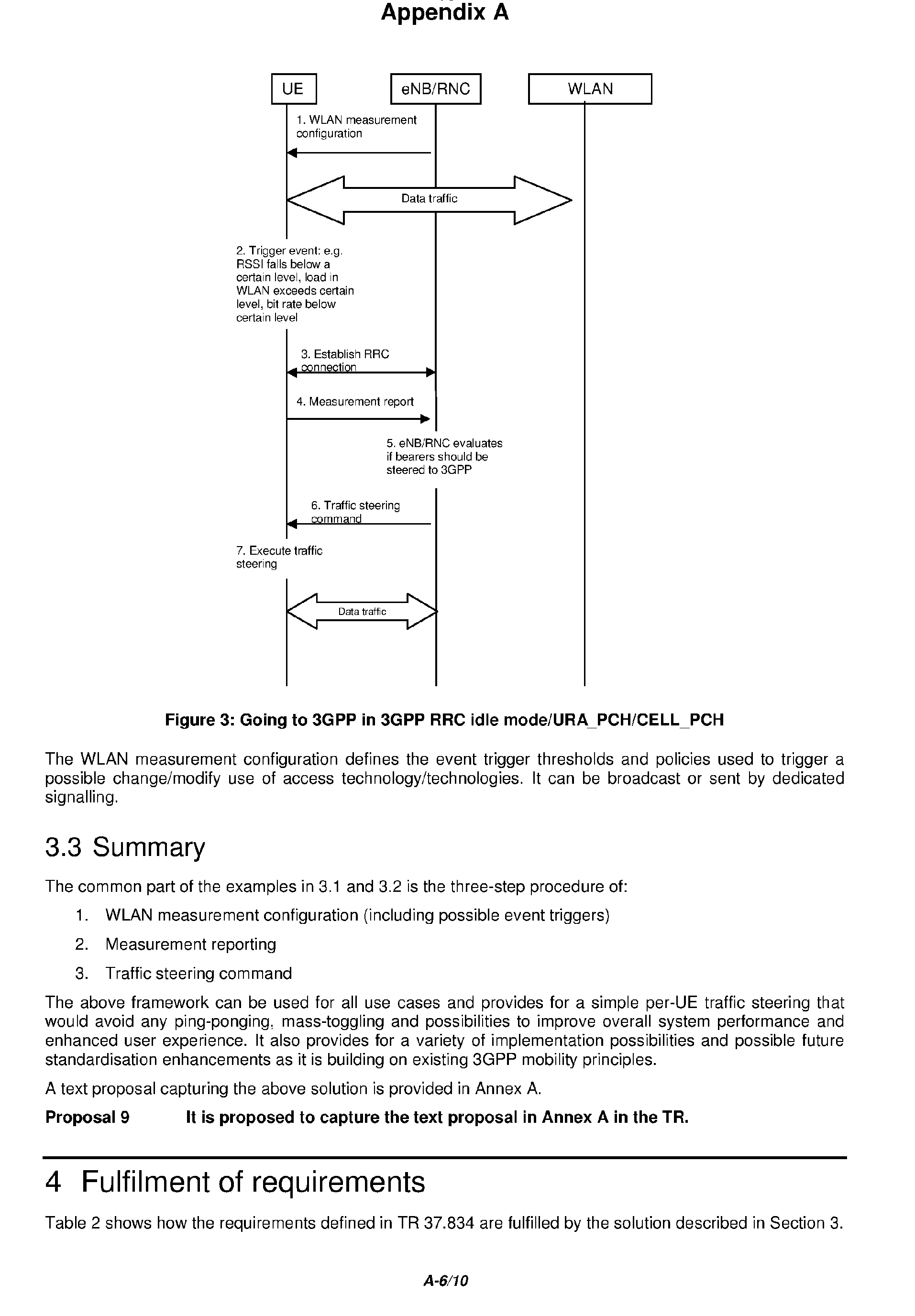

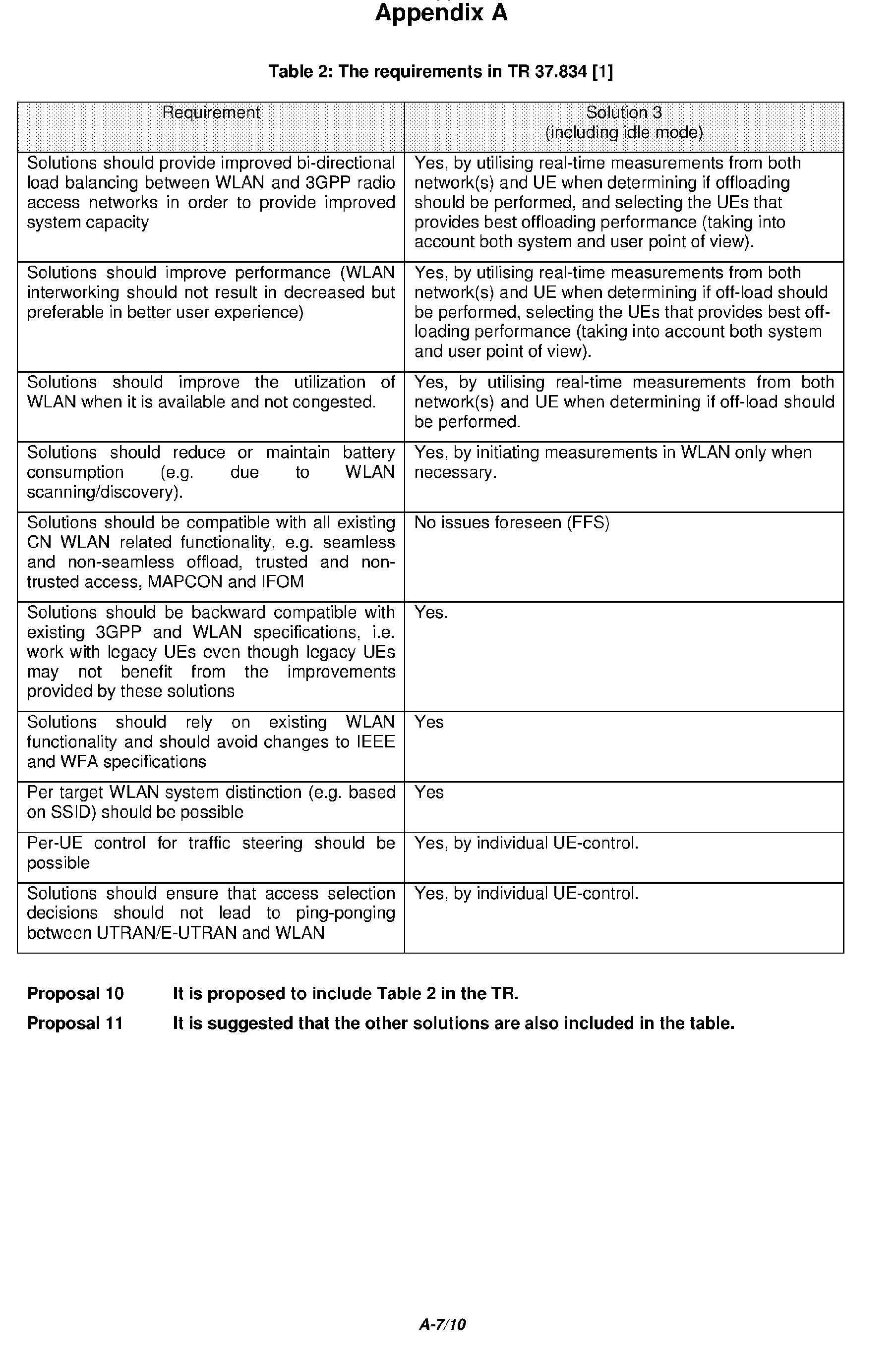

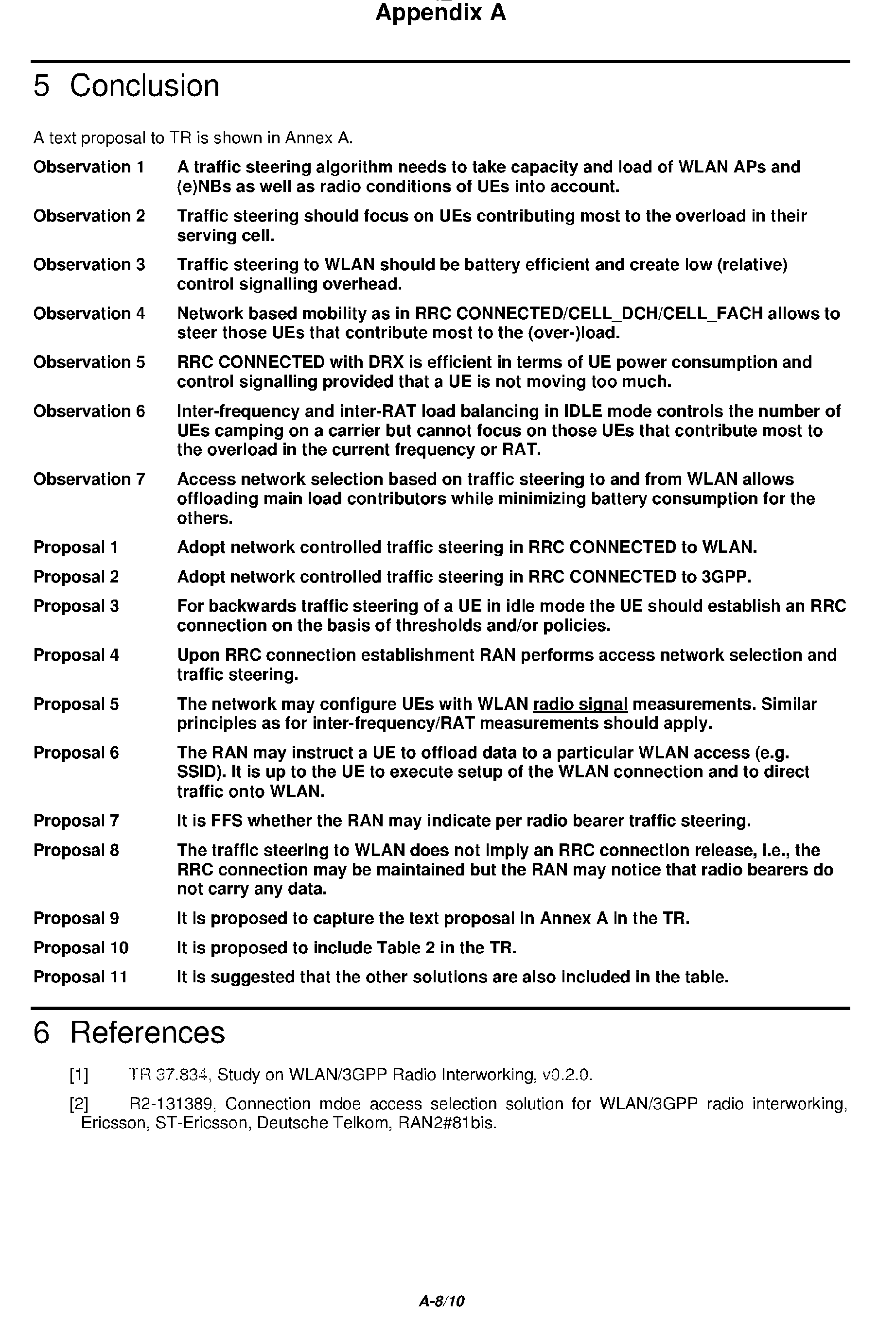

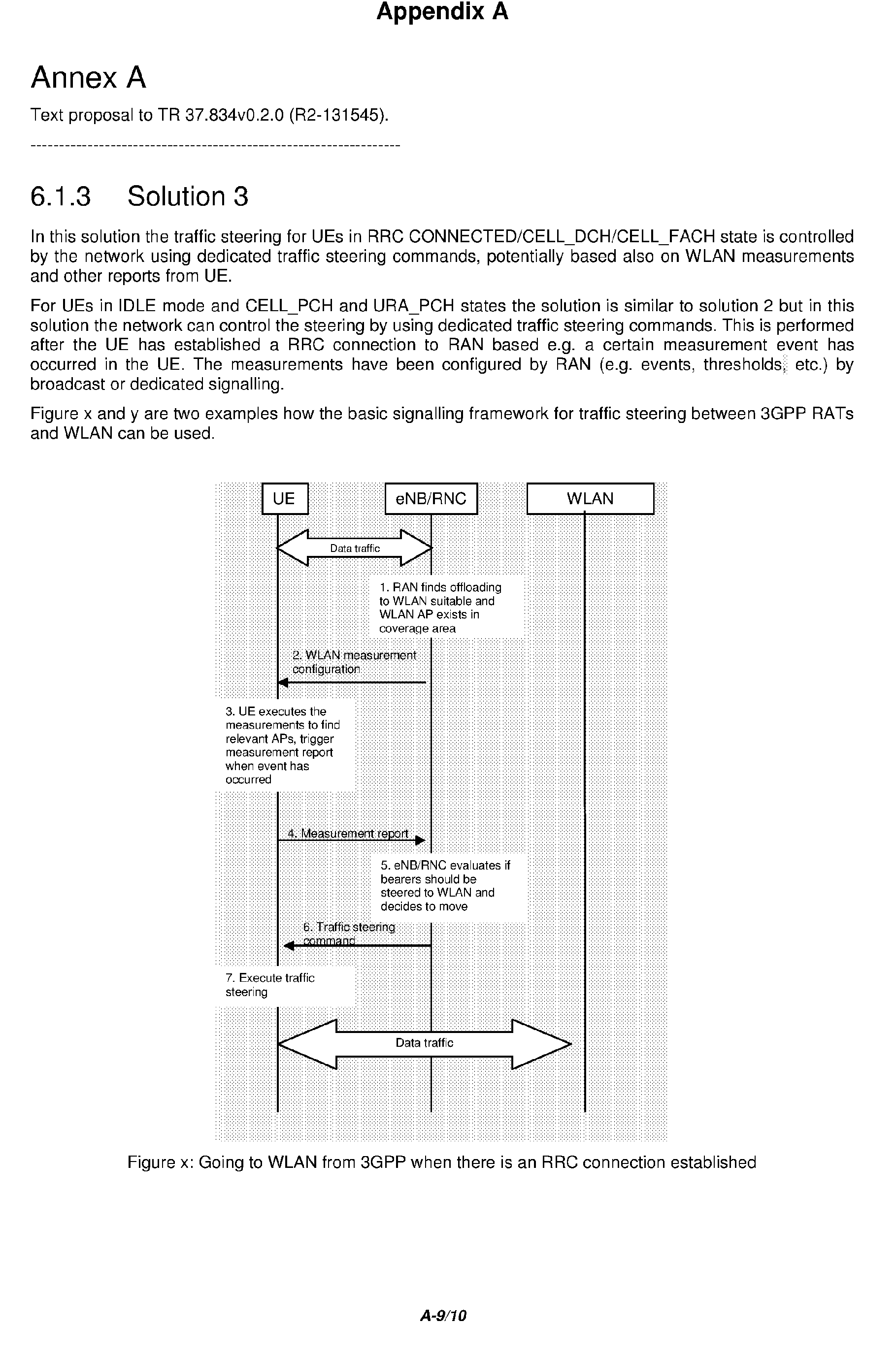

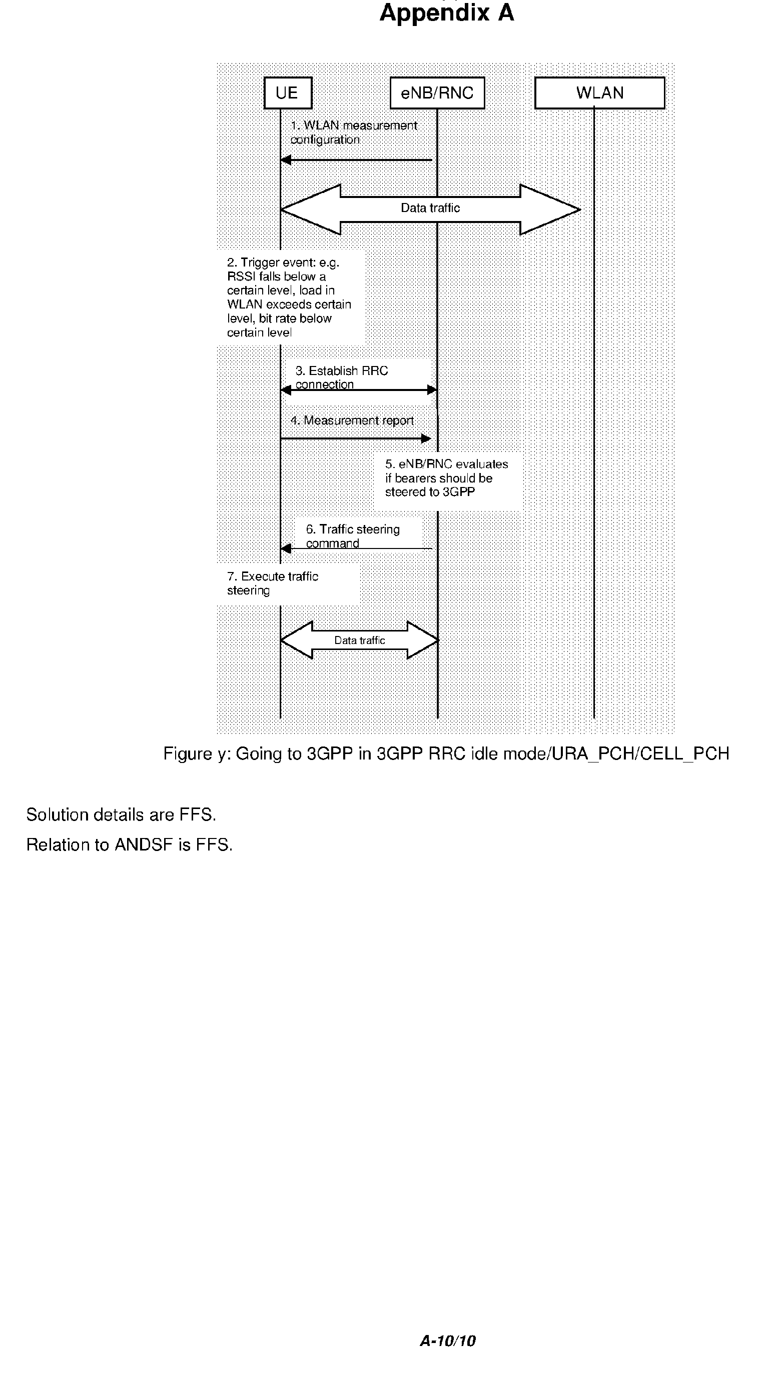

## Claims

1. A method in a network node of a first wireless telecommunications network, the method comprising:
determining whether a terminal served by the first network is connected to a wireless local area network, WLAN (620); and
if the terminal is connected to a WLAN, adjusting operation (630) of an inactivity timer associated with the terminal so that triggering of an operation to move the terminal to an inactive state with respect to the first network is unlikely or impossible and dedicated signalling between the terminal and the first network is possible, wherein the inactive state is a state of the terminal in which dedicated signalling between the terminal and the first network is not possible.

2. The method of claim 1, wherein determining whether a terminal served by the first network is connected to a WLAN (620) is based on a WLAN status report received from the terminal.

3. The method of claim 1, wherein determining whether a terminal served by the first network is connected to a WLAN (620) is based on the sending of a traffic steering message to the terminal by the first network.

4. The method of claim 1, wherein determining whether a terminal served by the first network is connected to a WLAN (620) is based on the reception from the terminal of an indication that a traffic steering message, sent to the terminal by the first network, has been applied by the terminal.

5. The method of claim 1, wherein determining whether a terminal served by the first network is connected to a WLAN (620) is based on information received from a core network associated with the first network.

6. The method of claim 1, wherein the method further comprises the step of:
after adjusting the operation of the inactivity timer so that triggering of an operation to move the terminal to an inactive state with respect to the first network is unlikely or impossible, configuring the terminal with a discontinuous reception configuration.

7. A network node (900) for use in a first wireless telecommunication network, the network node (900) comprising a processing circuit (920) adapted to:
determine whether a terminal (300) served by the first network (304) is connected to a wireless local area network, WLAN (302); and
adjust operation of an inactivity timer associated with the terminal (300) if the terminal (300) is connected to a WLAN (302) so that triggering of an operation to move the terminal (300) to an inactive state with respect to the first network (304) is unlikely or impossible and dedicated signalling between the terminal and the first network is possible, wherein the inactive state is a state of the terminal in which dedicated signalling between the terminal and the first network is not possible.

8. The network node (900) of claim 7, wherein the processing circuit (920) is adapted to adjust operation of an inactivity timer associated with the terminal (300) by setting the value of an inactivity timer to a value that will be interpreted to prevent the timer from ever expiring.

9. A method in a network node of a first wireless telecommunications network, the method comprising:
determining whether a terminal served by the first network is connected to a wireless local area network, WLAN (620) based on receiving an indication from the terminal indicating that the terminal does not wish to be moved to an inactive state with respect to the first network; and
if the terminal is connected to a WLAN, refraining from moving the terminal to an inactive state with respect to the first network (630) such that dedicated signalling between the terminal and the first network is possible, wherein the inactive state is a state of the terminal in which dedicated signalling between the terminal and the first network is not possible.

10. The method of claim 9, wherein the method further comprises the step of:
after refraining from moving the terminal to an inactive state, configuring the terminal with a discontinuous reception configuration.

11. A network node (900) for use in a first wireless telecommunication network, the network node (900) comprising a processing circuit (920) adapted to:
determine whether a terminal (300) served by the first network (304) is connected to a wireless local area network, WLAN (302), based on receiving an indication from the terminal indicating that the terminal does not wish to be moved to an inactive state with respect to the first network (304); and
refrain from moving the terminal (300) to an inactive state with respect to the first network (304) if the terminal (300) is connected to a WLAN (302) such that dedicated signalling between the terminal and the first network is possible, wherein the inactive state is a state of the terminal in which dedicated signalling between the terminal and the first network is not possible.

12. A method in a terminal that is being served by a first wireless telecommunications network, the method comprising:
determining whether the terminal is connected to a wireless local area network, WLAN (700); and
if the terminal is connected to a WLAN, refraining from entering an inactive state with respect to the first network (710) such that dedicated signalling between the terminal and the first network is possible by indicating to the first network that the terminal does not wish to be moved to an inactive state, wherein the inactive state is a state of the terminal in which dedicated signalling between the terminal and the first network is not possible.

13. The method of claim 12, the method further comprising the step of:
entering an inactive state if indicated to do so by the first network if it is determined that the terminal is not connected to a WLAN (720).

14. A terminal (300) for use in a first wireless telecommunication network, the terminal (300) comprising a processing circuit (1510) adapted to:
determine whether the terminal (300) is connected to a wireless local area network, WLAN (302), while being served by the first network (304); and
refrain from entering an inactive state with respect to the first network (304) if the terminal (300) is connected to a WLAN (302) such that dedicated signalling between the terminal and the first network is possible by indicating to the first network that the terminal does not wish to be moved to an inactive state, wherein the inactive state is a state of the terminal in which dedicated signalling between the terminal and the first network is not possible.

15. The terminal (300) of claim 14, wherein the processing circuit (1510) is further adapted to:
control the terminal to enter an inactive state if indicated to do so by the first network if it is determined that the terminal is not connected to a WLAN.

16. The terminal (300) of claim 14 or 15, wherein the processing circuit (1510) is further adapted to:
determine whether the terminal (300) has disconnected from the WLAN (302); and
enable the terminal (300) to enter an inactive state if indicated to do so by the first network (304) if the terminal (300) has disconnected from the WLAN (302).

17. The terminal (300) of any of claims 14 to 16, wherein the processing circuit (1510) is further adapted to:
determine whether the terminal (300) is inactive in both the WLAN (302) and first network (304); and
enable the terminal (300) to enter an inactive state if indicated to do so by the first network (302) if the terminal (300) is inactive in both the WLAN (302) and the first network (304).

## Patentansprüche

1. Verfahren in einem Netzwerkknoten eines ersten drahtlosen Telekommunikationsnetzwerks, wobei das Verfahren Folgendes umfasst:
Bestimmen, ob ein Endgerät, das vom ersten Netzwerk bedient wird, mit einem drahtlosen lokalen Netzwerk, WLAN (620) verbunden ist; und
wenn das Endgerät mit einem WLAN verbunden ist, Einstellen eines Betriebs (630) eines Inaktivitätstimers, der mit dem Endgerät verknüpft ist, derart, dass ein Auslösen eines Betriebs, um das Endgerät in Bezug auf das erste Netzwerk in einen inaktiven Status zu bewegen, unwahrscheinlich oder unmöglich und eine dedizierte Signalisierung zwischen dem Endgerät und dem ersten Netzwerk möglich ist, wobei der inaktive Status ein Status des Endgeräts ist, in dem eine dedizierte Signalisierung zwischen dem Endgerät und dem ersten Netzwerk nicht möglich ist.

2. Verfahren nach Anspruch 1, wobei das Bestimmen, ob ein Endgerät, das vom ersten Netzwerk bedient wird, mit einem WLAN (620) verbunden ist, auf einem WLAN-Zustandsbericht, der vom Endgerät empfangen wird, basiert.

3. Verfahren nach Anspruch 1, wobei das Bestimmen, ob ein Endgerät, das vom ersten Netzwerk bedient wird, mit einem WLAN (620) verbunden ist, auf dem Senden einer Verkehrslenkungsnachricht vom ersten Netzwerk an das Endgerät basiert.

4. Verfahren nach Anspruch 1, wobei das Bestimmen, ob ein Endgerät, das vom ersten Netzwerk bedient wird, mit einem WLAN (620) verbunden ist, auf dem Empfang einer Anzeige vom Endgerät basiert, dass eine Verkehrslenkungsnachricht, die vom ersten Netzwerk an das Endgerät gesendet wurde, vom Endgerät angewendet wurde.

5. Verfahren nach Anspruch 1, wobei das Bestimmen, ob ein Endgerät, das vom ersten Netzwerk bedient wird, mit einem WLAN (620) verbunden ist, auf Informationen basiert, die von einem Kernnetzwerk empfangen werden, das mit dem ersten Netzwerk verknüpft ist.

6. Verfahren nach Anspruch 1, wobei das Verfahren ferner folgenden Schritt umfasst:
nach dem Einstellen des Betriebs des Inaktivitätstimers derart, dass ein Auslösen eines Betriebs, um das Endgerät in Bezug auf das erste Netzwerk in einen inaktiven Status zu bewegen, unwahrscheinlich oder unmöglich ist, Auslegen des Endgeräts mit einer diskontinuierlichen Empfangsauslegung.

7. Netzwerkknoten (900) zur Verwendung in einem ersten drahtlosen Telekommunikationsnetzwerk, wobei der Netzwerkknoten (900) eine Verarbeitungsschaltung (920) umfasst, die zu Folgendem angepasst ist:
Bestimmen, ob ein Endgerät (300), das vom ersten Netzwerk (304) bedient wird, mit einem drahtlosen lokalen Netzwerk, WLAN (302) verbunden ist; und
Einstellen eines Betriebs eines Inaktivitätstimers, der mit dem Endgerät (300) verknüpft ist, wenn das Endgerät (300) mit einem WLAN (302) verbunden ist, derart, dass ein Auslösen eines Betriebs, um das Endgerät (300) in Bezug auf das erste Netzwerk (304) in einen inaktiven Status zu bewegen, unwahrscheinlich oder unmöglich und eine dedizierte Signalisierung zwischen dem Endgerät und dem ersten Netzwerk möglich ist, wobei der inaktive Status ein Status des Endgeräts ist, in dem eine dedizierte Signalisierung zwischen dem Endgerät und dem ersten Netzwerk nicht möglich ist.

8. Netzwerkknoten (900) nach Anspruch 7, wobei die Verarbeitungsschaltung (920) angepasst ist, einen Betrieb eines Inaktivitätstimers, der mit dem Endgerät (300) verknüpft ist, durch Festlegen des Wertes eines Inaktivitätstimers auf einen Wert, der derart interpretiert wird, dass verhindert wird, dass der Timer je abläuft, einzustellen.

9. Verfahren in einem Netzwerkknoten eines ersten drahtlosen Telekommunikationsnetzwerks, wobei das Verfahren Folgendes umfasst:
Bestimmen, ob ein Endgerät, das vom ersten Netzwerk bedient wird, mit einem drahtlosen lokalen Netzwerk, WLAN (620) verbunden ist, auf Basis des Empfangs einer Anzeige vom Endgerät, die anzeigt, dass das Endgerät in Bezug auf das erste Netzwerk nicht in einen inaktiven Status bewegt werden möchte; und
wenn das Endgerät mit einem WLAN verbunden ist, Unterlassen des Bewegens des Endgeräts in Bezug auf das erste Netzwerk (630) in einen inaktiven Status, derart, dass eine dedizierte Signalisierung zwischen dem Endgerät und dem ersten Netzwerk möglich ist, wobei der inaktive Status ein Status des Endgeräts ist, in dem eine dedizierte Signalisierung zwischen dem Endgerät und dem ersten Netzwerk nicht möglich ist.

10. Verfahren nach Anspruch 9, wobei das Verfahren ferner folgenden Schritt umfasst:
nach dem Unterlassen des Bewegens des Endgeräts in einen inaktiven Status Auslegen des Endgeräts mit einer diskontinuierlichen Empfangsauslegung.

11. Netzwerkknoten (900) zur Verwendung in einem ersten drahtlosen Telekommunikationsnetzwerk, wobei der Netzwerkknoten (900) eine Verarbeitungsschaltung (920) umfasst, die zu Folgendem angepasst ist:
Bestimmen, ob ein Endgerät (300), das vom ersten Netzwerk (304) bedient wird, mit einem drahtlosen lokalen Netzwerk, WLAN (302) verbunden ist, auf Basis des Empfangs einer Anzeige vom Endgerät, die anzeigt, dass das Endgerät in Bezug auf das erste Netzwerk (304) nicht in einen inaktiven Status bewegt werden möchte; und
Unterlassen des Bewegens des Endgeräts (300) in Bezug auf das erste Netzwerk (304) in einen inaktiven Status, wenn das Endgerät (300) mit einem WLAN (302) verbunden ist, derart, dass eine dedizierte Signalisierung zwischen dem Endgerät und dem ersten Netzwerk möglich ist, wobei der inaktive Status ein Status des Endgeräts ist, in dem eine dedizierte Signalisierung zwischen dem Endgerät und dem ersten Netzwerk nicht möglich ist.

12. Verfahren in einem Endgerät, das von einem ersten drahtlosen Telekommunikationsnetzwerk bedient wird, wobei das Verfahren Folgendes umfasst:
Bestimmen, ob das Endgerät mit einem drahtlosen lokalen Netzwerk, WLAN (700) verbunden ist; und
wenn das Endgerät mit einem WLAN verbunden ist, Unterlassen des Eintretens in einen inaktiven Status in Bezug auf das erste Netzwerk (710), derart, dass eine dedizierte Signalisierung zwischen dem Endgerät und dem ersten Netzwerk möglich ist, indem dem ersten Netzwerk angezeigt wird, dass das Endgerät nicht in einen inaktiven Status bewegt werden möchte, wobei der inaktive Status ein Status des Endgeräts ist, in dem eine dedizierte Signalisierung zwischen dem Endgerät und dem ersten Netzwerk nicht möglich ist.

13. Verfahren nach Anspruch 12, wobei das Verfahren ferner folgenden Schritt umfasst:
Eintreten in einen inaktiven Status, wenn dies vom ersten Netzwerk angezeigt wird, wenn bestimmt wird, dass das Endgerät nicht mit einem WLAN (720) verbunden ist.

14. Endgerät (300) zur Verwendung in einem ersten drahtlosen Telekommunikationsnetzwerk, wobei das Endgerät (300) eine Verarbeitungsschaltung (1510) umfasst, die zu Folgendem angepasst ist:
Bestimmen, ob das Endgerät (300) mit einem drahtlosen lokalen Netzwerk, WLAN (302) verbunden ist, während es vom ersten Netzwerk (304) bedient wird; und
Unterlassen des Eintretens in einen inaktiven Status in Bezug auf das erste Netzwerk (304), wenn das Endgerät (300) mit einem WLAN (302) verbunden ist, derart, dass eine dedizierte Signalisierung zwischen dem Endgerät und dem ersten Netzwerk möglich ist, indem dem ersten Netzwerk angezeigt wird, dass das Endgerät nicht in einen inaktiven Status bewegt werden möchte, wobei der inaktive Status ein Status des Endgeräts ist, in dem eine dedizierte Signalisierung zwischen dem Endgerät und dem ersten Netzwerk nicht möglich ist.

15. Endgerät (300) nach Anspruch 14, wobei die Verarbeitungsschaltung (1510) ferner zu Folgendem angepasst ist:
Steuern des Endgeräts derart, dass es in einen inaktiven Status eintritt, wenn dies vom ersten Netzwerk angezeigt wird, wenn bestimmt wird, dass das Endgerät nicht mit einem WLAN verbunden ist.

16. Endgerät (300) nach Anspruch 14 oder 15, wobei die Verarbeitungsschaltung (1510) ferner zu Folgendem angepasst ist:
Bestimmen, ob das Endgerät (300) sich vom WLAN (302) getrennt hat; und
Ermöglichen, dass das Endgerät (300) in einen inaktiven Status eintritt, wenn dies vom ersten Netzwerk (304) angezeigt wird, wenn sich das Endgerät (300) vom WLAN (302) getrennt hat.

17. Endgerät (300) nach einem der Ansprüche 14 bis 16, wobei die Verarbeitungsschaltung (1510) ferner zu Folgendem angepasst ist:
Bestimmen, ob das Endgerät (300) sowohl im WLAN (302) als auch im ersten Netzwerk (304) inaktiv ist; und
Ermöglichen, dass das Endgerät (300) in einen inaktiven Status eintritt, wenn dies vom ersten Netzwerk (302) angezeigt wird, wenn das Endgerät (300) sowohl im WLAN (302) als auch im ersten Netzwerk (304) inaktiv ist.

## Revendications

1. Procédé mis en oeuvre dans un noeud de réseau d'un premier réseau de télécommunication sans fil, le procédé comprenant les étapes ci-dessous consistant à :
déterminer si un terminal desservi par le premier réseau est connecté à un réseau local sans fil, WLAN, (620) ; et
si le terminal est connecté à un réseau WLAN, ajuster le fonctionnement (630) d'un temporisateur d'inactivité associé au terminal, de sorte que le déclenchement d'une opération visant à faire passer le terminal dans un état inactif relativement au premier réseau est improbable ou impossible, et qu'une signalisation dédiée entre le terminal et le premier réseau est possible, dans lequel l'état inactif est un état du terminal dans lequel une signalisation dédiée entre le terminal et le premier réseau n'est pas possible.

2. Procédé selon la revendication 1, dans lequel l'étape consistant à déterminer si un terminal desservi par le premier réseau est connecté à un réseau WLAN (620) est basée sur un rapport d'état de réseau WLAN reçu en provenance du terminal.

3. Procédé selon la revendication 1, dans lequel l'étape consistant à déterminer si un terminal desservi par le premier réseau est connecté à un réseau WLAN (620) est basée sur l'envoi d'un message de direction du trafic au terminal par le premier réseau.

4. Procédé selon la revendication 1, dans lequel l'étape consistant à déterminer si un terminal desservi par le premier réseau est connecté à un réseau WLAN (620) est basée sur la réception, par le terminal, d'une indication selon laquelle un message de direction du trafic, envoyé au terminal par le premier réseau, a été appliqué par le terminal.

5. Procédé selon la revendication 1, dans lequel l'étape consistant à déterminer si un terminal desservi par le premier réseau est connecté à un réseau WLAN (620) est basée sur des informations reçues en provenance d'un réseau central associé au premier réseau.

6. Procédé selon la revendication 1, dans lequel le procédé comprend en outre l'étape ci-dessous consistant à :
suite à l'ajustement du fonctionnement du temporisateur d'inactivité de sorte que le déclenchement d'une opération visant à faire passer le terminal dans un état inactif relativement au premier réseau est improbable ou impossible, configurer le terminal avec une configuration de réception discontinue.

7. Noeud de réseau (900) destiné à être utilisé dans un premier réseau de télécommunication sans fil, le noeud de réseau (900) comprenant un circuit de traitement (920) apte à :
déterminer si un terminal (300) desservi par le premier réseau (304) est connecté à un réseau local sans fil, WLAN (302) ; et
ajuster le fonctionnement d'un temporisateur d'inactivité associé au terminal (300) si le terminal (300) est connecté à un réseau WLAN (302), de sorte que le déclenchement d'une opération visant à faire passer le terminal (300) dans un état inactif relativement au premier réseau (304) est improbable ou impossible, et qu'une signalisation dédiée entre le terminal et le premier réseau est possible, dans lequel l'état inactif est un état du terminal dans lequel une signalisation dédiée entre le terminal et le premier réseau n'est pas possible.

8. Noeud de réseau (900) selon la revendication 7, dans lequel le circuit de traitement (920) est apte à ajuster le fonctionnement d'un temporisateur d'inactivité associé au terminal (300), en définissant la valeur d'un temporisateur d'inactivité sur une valeur qui sera interprétée de manière à empêcher toute expiration du temporisateur.

9. Procédé mis en oeuvre dans un noeud de réseau d'un premier réseau de télécommunication sans fil, le procédé comprenant les étapes ci-dessous consistant à :
déterminer si un terminal desservi par le premier réseau est connecté à un réseau local sans fil, WLAN, (620), sur la base de la réception d'une indication, en provenance du terminal, indiquant que le terminal ne souhaite pas être placé dans un état inactif relativement au premier réseau ; et
si le terminal est connecté à un réseau WLAN, s'abstenir de faire passer le terminal dans un état inactif relativement au premier réseau (630), de sorte qu'une signalisation dédiée entre le terminal et le premier réseau est possible, dans lequel l'état inactif est un état du terminal dans lequel une signalisation dédiée entre le terminal et le premier réseau n'est pas possible.

10. Procédé selon la revendication 9, dans lequel le procédé comprend en outre l'étape ci-dessous consistant à :
suite à l'étape consistant à s'abstenir de faire passer le terminal dans un état inactif, configurer le terminal avec une configuration de réception discontinue.

11. Noeud de réseau (900) destiné à être utilisé dans un premier réseau de télécommunication sans fil, le noeud de réseau (900) comprenant un circuit de traitement (920) apte à :
déterminer si un terminal (300) desservi par le premier réseau (304) est connecté à un réseau local sans fil, WLAN, (302), sur la base de la réception d'une indication, en provenance du terminal, indiquant que le terminal ne souhaite pas être placé dans un état inactif relativement au premier réseau (304) ; et
s'abstenir de faire passer le terminal (300) dans un état inactif relativement au premier réseau (304), si le terminal (300) est connecté à un réseau WLAN (302), de sorte qu'une signalisation dédiée entre le terminal et le premier réseau est possible, dans lequel l'état inactif est un état du terminal dans lequel une signalisation dédiée entre le terminal et le premier réseau n'est pas possible.

12. Procédé mis en oeuvre dans un terminal qui est desservi par un premier réseau de télécommunication sans fil, le procédé comprenant les étapes ci-dessous consistant à :
déterminer si le terminal est connecté à un réseau local sans fil, WLAN, (700) ; et
si le terminal est connecté à un réseau WLAN, s'abstenir d'entrer dans un état inactif relativement au premier réseau (710), de sorte qu'une signalisation dédiée entre le terminal et le premier réseau est possible, en indiquant au premier réseau que le terminal ne souhaite pas être placé d'un état inactif, dans lequel l'état inactif est un état du terminal dans lequel une signalisation dédiée entre le terminal et le premier réseau n'est pas possible.

13. Procédé selon la revendication 12, dans lequel le procédé comprend en outre l'étape ci-dessous consistant à :
entrer dans un état inactif, si le premier réseau l'indique, s'il est déterminé que le terminal n'est pas connecté à un réseau WLAN (720).

14. Terminal (300) destiné à être utilisé dans un premier réseau de télécommunication sans fil, le terminal (300) comprenant un circuit de traitement (1510) apte à :
déterminer si le terminal (300) est connecté à un réseau local sans fil, WLAN, (302), tandis qu'il est desservi par le premier réseau (304) ; et
s'abstenir d'entrer dans un état inactif relativement au premier réseau (304), si le terminal (300) est connecté à un réseau WLAN (302), de sorte qu'une signalisation dédiée entre le terminal et le premier réseau est possible, en indiquant au premier réseau que le terminal ne souhaite pas être placé d'un état inactif, dans lequel l'état inactif est un état du terminal dans lequel une signalisation dédiée entre le terminal et le premier réseau n'est pas possible.

15. Terminal (300) selon la revendication 14, dans lequel le circuit de traitement (1510) est en outre apte à :
commander au terminal d'entrer dans un état inactif, si le premier réseau l'indique, s'il est déterminé que le terminal n'est pas connecté à un réseau WLAN.

16. Terminal (300) selon la revendication 14 ou 15, dans lequel le circuit de traitement (1510) est en outre apte à :
déterminer si le terminal (300) s'est déconnecté du réseau WLAN (302) ; et
autoriser le terminal (300) à entrer dans un état inactif, si le premier réseau (304) l'indique, si le terminal (300) s'est déconnecté du réseau WLAN (302).

17. Terminal (300) selon l'une quelconque des revendications 14 à 16, dans lequel le circuit de traitement (1510) est en outre apte à :
déterminer si le terminal (300) est inactif à la fois dans le réseau WLAN (302) et dans le premier réseau (304) ; et
autoriser le terminal (300) à entrer dans un état inactif, si le premier réseau (302) l'indique, si le terminal (300) est inactif à la fois dans le réseau WLAN (302) et dans le premier réseau (304).
